(19) Europäisches Patentamt
European Patent Office
Office européen des brevets

(11) **EP 2 440 503 B1**

(12) **FASCICULE DE BREVET EUROPEEN**

(45) Date de publication et mention de la délivrance du brevet:
**06.01.2021 Bulletin 2021/01**

(21) Numéro de dépôt: **10737997.6**

(22) Date de dépôt: **11.06.2010**

(51) Int Cl.:
*C03C 17/36* *(2006.01)*   *C03C 23/00* *(2006.01)*

(86) Numéro de dépôt international:
**PCT/FR2010/051172**

(87) Numéro de publication internationale:
**WO 2010/142926 (16.12.2010 Gazette 2010/50)**

(54) **PROCEDE DE DEPOT DE COUCHE MINCE ET PRODUIT OBTENU**

DÜNNSCHICHTBESCHICHTUNGSVERFAHREN UND ENDPRODUKT

THIN FILM DEPOSITION METHOD AND RESULTING PRODUCT

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **12.06.2009 FR 0953956**

(43) Date de publication de la demande:
**18.04.2012 Bulletin 2012/16**

(73) Titulaire: **SAINT-GOBAIN GLASS FRANCE**
**92400 Courbevoie (FR)**

(72) Inventeurs:
• **REYMOND, Vincent**
**F-92160 Antony (FR)**
• **KHARCHENKO, Andriy**
**F-91120 Palaiseau (FR)**
• **NADAUD, Nicolas**
**F-75013 Paris (FR)**

(74) Mandataire: **Saint-Gobain Recherche**
**Département Propriété Industrielle**
**39 Quai Lucien Lefranc**
**93300 Aubervilliers (FR)**

(56) Documents cités:
**EP-A- 0 718 250**       **WO-A-02/48065**
**WO-A-03/093186**       **WO-A-2005/070841**
**WO-A-2007/101963**      **WO-A-2008/096089**
**WO-A1-2007/042687**     **US-A1- 2005 247 555**

**Description**

L'invention se rapporte au domaine des couches minces inorganiques, notamment déposées sur des substrats.

De nombreuses couches minces sont déposées sur des substrats, notamment en verre plat ou faiblement bombé, afin de conférer aux matériaux obtenus des propriétés particulières : propriétés optiques, par exemple de réflexion ou d'absorption de rayonnements d'un domaine de longueurs d'onde données, propriétés de conduction électrique particulière, ou encore propriétés liées à la facilité de nettoyage ou à la possibilité pour le matériau de s'auto-nettoyer.

Ces couches minces sont le plus souvent à base de composés inorganiques : oxydes, nitrures, ou encore métaux. Leur épaisseur varie généralement de quelques nanomètres à quelques centaines de nanomètres, d'où leur qualificatif de « minces ».

Parmi les plus intéressantes figurent les couches minces à base d'argent métallique, lesquelles ont des propriétés de conduction électrique et de réflexion des rayonnements infrarouges, d'où leur utilisation dans des vitrages à contrôle solaire, notamment anti-solaires (visant à diminuer la quantité d'énergie solaire entrante) et/ou à faible émissivité (visant à diminuer la quantité d'énergie dissipée vers l'extérieur d'un bâtiment ou d'un véhicule).

Afin notamment d'éviter l'oxydation de l'argent et d'atténuer ses propriétés de réflexion dans le visible, la ou chaque couche d'argent est généralement insérée dans un empilement de couches. Dans le cas des vitrages à contrôle solaire ou à faible émissivité, la ou chaque couche mince à base d'argent est généralement disposée entre deux couches minces diélectriques à base d'oxyde ou de nitrure (par exemple en $SnO_2$ ou $Si_3N_4$). Peuvent être également disposées sous la couche d'argent une couche très fine destinée à favoriser le mouillage et la nucléation de l'argent (par exemple en oxyde de zinc ZnO) et sur la couche d'argent une seconde couche très fine (sacrificielle, par exemple en titane) destinée à protéger la couche d'argent au cas où le dépôt de la couche subséquente est réalisé dans une atmosphère oxydante ou en cas de traitements thermiques conduisant à une migration d'oxygène au sein de l'empilement. Ces couches sont respectivement appelées couche de mouillage et couche de bloqueur. Les empilements peuvent également comprendre plusieurs couches d'argent.

Les couches d'argent présentent la particularité de voir certaines de leurs propriétés améliorées lorsqu'elles sont dans un état au moins partiellement cristallisé. On cherche généralement à augmenter au maximum le taux de cristallisation de ces couches (la proportion massique ou volumique de matière cristallisée) et la taille des grains cristallins (ou la taille de domaines cohérents de diffraction mesurés par des méthodes de diffraction des rayons X).

Il est notamment connu que les couches d'argent présentent un taux de cristallisation élevé et par conséquent une faible teneur résiduelle en argent amorphe présentent une émissivité et une résistivité plus basses ainsi qu'une transmission dans le visible plus élevée que des couches d'argent majoritairement amorphes. La conductivité électrique et les propriétés de faible émissivité de ces couches sont ainsi améliorées. L'augmentation de la taille des grains s'accompagne en effet d'une diminution des joints de grains, favorable à la mobilité des porteurs de charge électrique.

Un procédé couramment employé à l'échelle industrielle pour le dépôt de couches minces, notamment sur substrat verrier, est le procédé de pulvérisation cathodique assisté par champ magnétique, appelé procédé « magnétron ». Dans ce procédé, un plasma est créé sous un vide poussé au voisinage d'une cible comprenant les éléments chimiques à déposer. Les espèces actives du plasma, en bombardant la cible, arrachent lesdits éléments, qui se déposent sur le substrat en formant la couche mince désirée. Ce procédé est dit « réactif » lorsque la couche est constituée d'un matériau résultant d'une réaction chimique entre les éléments arrachés de la cible et le gaz contenu dans le plasma. L'avantage majeur de ce procédé réside dans la possibilité de déposer sur une même ligne un empilement très complexe de couches en faisant successivement défiler le substrat sous différentes cibles, ce généralement dans un seul et même dispositif.

Lors de la mise en œuvre industrielle du procédé magnétron, le substrat reste à température ambiante ou subit une élévation de température modérée (moins de 80°C), particulièrement lorsque la vitesse de défilement du substrat est élevée (ce qui est généralement recherché pour des raisons économiques). Ce qui peut paraître un avantage constitue toutefois un inconvénient dans le cas des couches précitées, car les faibles températures impliquées ne permettent généralement pas une croissance cristalline suffisante. C'est le cas tout particulièrement pour des couches minces de faible épaisseur et/ou des couches constituées de matériaux dont le point de fusion est très élevé. Les couches obtenues selon ce procédé sont donc majoritairement voire totalement amorphes ou nano-cristallisées (la taille moyenne des grains cristallins étant inférieure à quelques nanomètres), et des traitements thermiques se révèlent nécessaires pour obtenir le taux de cristallisation souhaité ou la taille de grains désirée.

Des traitements thermiques possibles consistent à réchauffer le substrat soit pendant le dépôt, soit à l'issue du dépôt, en sortie de ligne magnétron. Le plus généralement, des températures d'au moins 200°C ou 300°C sont nécessaires. La cristallisation est en effet d'autant meilleure et la taille des grains est d'autant plus grande que la température du substrat est proche de la température de fusion du matériau constituant le film mince.

Le chauffage du substrat dans les lignes magnétron industrielles (pendant le dépôt) s'est toutefois révélé malaisé à mettre en œuvre, en particulier car les transferts de chaleur sous vide, nécessairement de nature radiative, sont difficiles à maîtriser et impliquent un coût élevé dans le cas des substrats de grande taille, de plusieurs mètres de largeur. Dans le cas de substrats de verre de faible épaisseur, ce type de traitement implique souvent des risques de casse élevés. En outre, les couches d'argent déposées sur un substrat chaud ont tendance à former des couches discontinues, sous forme d'îlots, dont la résistivité est élevée.

Le chauffage du substrat revêtu à l'issue du dépôt, par exemple en plaçant le substrat dans un four ou une étuve ou en soumettant le substrat au rayonnement infrarouge issu de dispositifs de chauffage conventionnels tels que des lampes infrarouge, présente également des inconvénients car ces différents procédés contribuent à chauffer sans discernement le substrat et la couche mince. Le chauffage du substrat à des températures supérieures à 150°C est susceptible de générer des casses dans le cas de substrats de grande taille (plusieurs mètres de large) car il est impossible d'assurer une température identique sur toute la largeur du substrat. Le chauffage des substrats ralentit également l'ensemble du procédé, car il est nécessaire d'attendre leur refroidissement complet avant d'envisager leur découpe ou leur stockage, qui a généralement lieu en empilant les substrats les uns sur les autres. Un refroidissement très contrôlé est en outre indispensable pour éviter la génération de contraintes au sein du verre, et donc la possibilité de casses. Un tel refroidissement très contrôlé étant très coûteux, le recuit n'est généralement pas suffisamment contrôlé pour éliminer les contraintes thermiques au sein du verre, ce qui génère un nombre accru de casses en ligne. Le recuit présente en outre l'inconvénient de rendre la découpe du verre plus difficile, les fissures ayant une tendance moins forte à se propager linéairement.

Le chauffage des substrats revêtus a lieu dans le cas où les vitrages sont bombés et/ou trempés, car un réchauffage du verre au-delà de sa température de ramollissement (généralement à plus de 600°C, voire 700°C pendant quelques minutes) est effectué. La trempe ou le bombage permet donc d'obtenir le résultat souhaité de cristallisation des couches minces. Il serait toutefois coûteux de soumettre à de tels traitements tous les vitrages dans le seul but d'améliorer la cristallisation des couches. En outre, les vitrages trempés ne peuvent plus être découpés, et certains empilements de couches minces ne supportent pas les températures élevées subies lors de la trempe du verre.

La demande de brevet WO 2008/096089, déposée par la demanderesse, décrit un procédé de recuit rapide qui consiste à apporter à la couche une puissance par unité de surface extrêmement élevée. La couche est chauffée extrêmement rapidement, sans que la chaleur ait le temps de diffuser au sein du substrat. Il est ainsi possible de traiter thermiquement la couche mince sans chauffer significativement le substrat, en limitant de ce fait le risque de casse lié au choc thermique. Pour des couches à base d'argent, les procédés envisagés sont des procédés mettant en œuvre un laser émettant un rayonnement infrarouge, l'induction, une torche plasma ou l'action d'une flamme. Ces procédés permettent d'atteindre des résistivités qui ne pouvaient être préalablement atteintes que par la trempe du verre.

L'invention a pour but de proposer un procédé amélioré permettant d'atteindre des résistivités encore plus faibles et d'obvier aux problèmes susmentionnés, tout en conservant une forte transmission lumineuse. Un autre but de l'invention est de proposer un procédé plus économique, permettant notamment de traiter plus rapidement des substrats de grande taille et/ou d'utiliser des dispositifs lasers de plus faible puissance.

A cet effet, l'invention a pour objet un procédé d'obtention d'un substrat revêtu sur au moins une face d'un empilement de couches minces bas-émissif tel que défini à la revendication 1.

L'absorption d'un substrat revêtu de l'empilement à une longueur d'onde donnée est définie comme étant égale à la valeur de 100% à laquelle sont soustraites la transmission du substrat revêtu à la même longueur d'onde et la réflexion du même substrat revêtu à la même longueur d'onde, du côté de l'empilement.

On entend par verre clair un verre silico-sodo-calcique obtenu par flottage, non revêtu de couches, et présentant une transmission lumineuse de l'ordre de 90%, une réflexion lumineuse de l'ordre de 8% et une transmission énergétique de l'ordre de 83% pour une épaisseur de 4 mm. Les transmissions et réflexions lumineuses et énergétiques sont telles que définies par la norme NF EN 410. Des verres clairs typiques sont par exemple commercialisés sous la dénomination SGG Planilux par la société Saint-Gobain Glass France ou sous la dénomination Planibel Clair par la société AGC Flat Glass Europe. Ces substrats sont classiquement employés pour la fabrication de vitrages bas-émissifs.

Le procédé selon l'invention n'est bien évidemment pas limité aux dépôts réalisés sur un substrat de verre clair ou sur un substrat de 4 mm d'épaisseur. Le revêtement peut être déposé sur tout type de substrat, mais l'absorption de l'empilement doit être telle que s'il avait été déposé sur un substrat de verre clair dont l'épaisseur est de 4 mm, l'absorption de ce substrat revêtu de l'empilement serait telle que revendiquée.

Le procédé selon l'invention permet d'apporter une énergie suffisante pour favoriser la cristallisation de la couche mince d'argent, par un mécanisme physico-chimique de croissance cristalline autour de germes déjà présents dans la couche, en restant en phase solide. Le fait de favoriser la cristallisation de la couche d'argent peut notamment se traduire en une disparition des éventuels résidus de phase amorphe et/ou en une augmentation de la taille des domaines cohérents de diffraction et/ou en une diminution de la densité de défauts ponctuels (lacunes, interstitiel) ou de défauts surfaciques ou volumiques tels que les macles.

Le procédé selon l'invention présente l'avantage de ne chauffer que l'empilement bas-émissif, sans échauffement significatif de la totalité du substrat. Il n'est ainsi plus nécessaire de procéder à un refroidissement lent et contrôlé du substrat avant la découpe ou le stockage du verre. Ce procédé rend également possible l'intégration d'un dispositif de chauffage sur les lignes de production continue existantes, plus particulièrement dans l'espace situé entre la sortie de l'enceinte de dépôt sous vide de la ligne magnétron et le dispositif de stockage du verre par empilage. Il est également possible dans certains cas de réaliser le traitement selon l'invention au sein même de l'enceinte de dépôt sous vide.

L'utilisation d'un rayonnement laser présente l'avantage d'obtenir des températures généralement inférieures à 100°C, et même souvent inférieures à 50°C au niveau de la face opposée à la première face du substrat (c'est-à-dire au niveau de la face non revêtue). Cette caractéristique particulièrement avantageuse est due au fait que le coefficient d'échange thermique est très élevé, typiquement supérieur à 400 W/(m$^2$.s). La puissance surfacique du rayonnement laser au niveau de l'empilement à traiter est même de préférence supérieure ou égale à 20 ou 30 kW/cm$^2$.

Cette très forte densité d'énergie permet d'atteindre au niveau de l'empilement la température souhaitée extrêmement rapidement (en général en un temps inférieur ou égal à 1 seconde) et par conséquent de limiter d'autant la durée du traitement, la chaleur générée n'ayant alors pas le temps de diffuser au sein du substrat. Ainsi, chaque point de l'empilement est de préférence soumis au traitement selon l'invention (et notamment porté à une température supérieure ou égale à 300°C) pour une durée généralement inférieure ou égale à 1 seconde, voire 0,5 seconde. A l'inverse, les lampes infrarouge classiquement utilisées (sans dispositif de focalisation du rayonnement) ne permettant pas d'atteindre ces fortes puissances par unité de surface, le temps de traitement doit être plus long pour atteindre les températures désirées (souvent plusieurs secondes), et le substrat est alors nécessairement porté à des températures élevées par diffusion de la chaleur, ce même si la longueur d'ondes du rayonnement est adaptée pour n'être absorbée que par la couche mince et non par le substrat.

Grâce au très fort coefficient d'échange thermique associé au procédé selon l'invention, la partie du verre située à 0,5 mm de la couche mince ne subit généralement pas de températures supérieures à 100°C. La température de la face du substrat opposée à la face traitée par le au moins un rayonnement laser n'excède de préférence pas 100°C, notamment 50°C et même 30°C pendant le traitement thermique.

L'essentiel de l'énergie apportée est donc « utilisée » par l'empilement afin d'améliorer les caractéristiques de cristallisation de la ou de chaque couche d'argent qu'il contient.

Le procédé selon l'invention est en outre amélioré par la présence dans l'empilement avant traitement d'au moins une couche mince absorbant suffisamment le rayonnement laser de sorte que l'absorption à au moins une longueur d'onde du rayonnement laser d'un substrat de verre clair de 4 mm d'épaisseur et revêtu de l'empilement est supérieure ou égale à 10%. L'empilement avant traitement peut comprendre une ou plusieurs de ces couches qui seront qualifiées dans la suite du texte de « couches absorbantes ». L'empilement peut par exemple comprendre une couche absorbante, ou encore deux, ou trois, voire quatre et même cinq ou six couches absorbantes. Quelque soit le nombre de couches absorbantes, l'important est que l'absorption de l'empilement à la longueur d'onde du laser soit telle que revendiquée. La présence d'au moins une couche absorbante contribue à renforcer considérablement l'effet du traitement laser : l'énergie absorbée par la couche absorbante est en effet réémise à proximité de la couche d'argent, augmentant la température locale au niveau de cette couche. L'augmentation résultante de l'efficacité du traitement laser permet alors d'améliorer les propriétés d'émissivité de l'empilement final, et/ou d'accélérer le traitement et/ou d'utiliser un laser moins puissant et donc moins coûteux.

Afin de renforcer encore l'efficacité du traitement laser, l'absorption de l'empilement est telle que l'absorption avant traitement laser et à au moins une longueur d'onde du rayonnement laser d'un substrat de verre clair de 4 mm d'épaisseur revêtu de l'empilement est de préférence supérieure ou égale à 12%, voire 13% ou 15%, et même 20% ou 25% ou encore 30%.

Le taux de cristallisation obtenu à l'aide du procédé selon l'invention est de préférence supérieur ou égal à 20% ou 50 %, notamment 70% et même 90%. Ce taux de cristallisation, défini comme étant la masse de matériau cristallisé sur la masse totale de matériau, peut être évalué par diffraction des rayons X en utilisant la méthode de Rietveld. Du fait d'un mécanisme de cristallisation par croissance de grains cristallins à partir de germes ou nuclei, l'augmentation du taux de cristallisation s'accompagne généralement d'une augmentation de la taille des grains cristallisés ou des domaines cohérents de diffraction mesurés par diffraction des rayons X.

L'amélioration des caractéristiques de cristallisation permet également d'augmenter la transmission lumineuse du substrat revêtu, d'au moins 5%, notamment 10% absolus, voire 15% et même 20%, toujours en absolu (il ne s'agit pas d'une augmentation relative). La transmission lumineuse est calculée selon la norme NF EN 410.

De préférence, la résistance carrée et/ou l'émissivité de l'empilement est diminuée d'au moins 10%, voire 15% ou même 20% par le traitement thermique. Il s'agit ici d'une diminution relative, par rapport à la valeur de l'émissivité ou de la résistance carrée avant traitement.

Selon un mode de réalisation préféré, l'empilement comprend au moins deux couches d'argent, l'absorption dudit empilement à au moins une longueur d'onde du rayonnement laser est telle que l'absorption d'un substrat de verre clair de 4 mm d'épaisseur revêtu dudit empilement à ladite au moins une longueur d'onde du rayonnement laser est supérieure ou égale à 11%, et le traitement thermique est tel que la sélectivité de l'empilement est augmentée d'au moins 1%, notamment 2% en relatif. La sélectivité est définie comme étant le rapport entre la transmission lumineuse et le facteur solaire. Ces deux grandeurs sont calculées selon la norme NF EN 410 sur un double vitrage comprenant deux substrats de verre clair de 6 mm d'épaisseur encadrant une lame de 15 mm d'épaisseur contenant de l'argon à 90%, dans lequel l'empilement est en face 2, c'est-à-dire sur la face du substrat en contact avec l'extérieur du bâtiment qui est opposée à la face tournée vers l'extérieur (cette dernière étant qualifiée de face 1).

Un autre avantage de l'invention réside dans le fait que le procédé fait subir l'équivalent d'une trempe à l'empilement de couches minces, mais pas au substrat. Il arrive que certains empilements de couches minces voient leurs propriétés optiques (coordonnées colorimétriques, transmission lumineuse ou énergétique) modifiées lorsque le verre est trempé. Le procédé selon l'invention permet alors d'obtenir un verre non trempé (donc ne présentant pas en son sein un profil de contraintes spécifique au verre trempé, ce qui le rend découpable) mais présentant sensiblement les mêmes propriétés optiques que s'il avait été trempé. Le procédé selon l'invention permet en outre d'éviter certains inconvénients liés à la trempe, notamment en termes d'aspect esthétique de l'empilement (apparition de flou...). Si le substrat revêtu et traité selon l'invention venait à être trempé, ses propriétés optiques ne seraient plus affectées par la trempe. Le traitement selon l'invention procure donc un autre avantage : celui de procurer des empilements (notamment comprenant deux ou trois couches d'argent) ayant les mêmes propriétés optiques à l'état trempé qu'à l'état non trempé. Il devient alors possible d'associer sur une même façade des vitrages non-trempés et des vitrages trempés, comprenant à la base le même empilement, mais présentant néanmoins le même aspect esthétique. Avant la trempe, les vitrages trempés peuvent avoir été préalablement traités selon l'invention ou non. On peut ainsi associer sur une même façade des vitrages comprenant le même empilement de base mais ayant subi trois traitements différents : une trempe, un traitement thermique selon l'invention, ou un traitement thermique selon l'invention suivi d'une trempe.

Ainsi, le procédé est de préférence tel que le paramètre ΔE* entre le substrat revêtu traité selon l'invention et le substrat revêtu non-traité selon l'invention mais trempé est inférieur ou égal à 2,0, notamment 1,5. Alternativement ou cumulativement, le procédé est de préférence tel que le paramètre ΔE* entre le substrat revêtu traité selon l'invention puis trempé et le substrat revêtu traité selon l'invention sans trempe est inférieur ou égal à 2,0, notamment 1,5. Comme convenu dans la technique, $\Delta E* = \sqrt{(\Delta L*)^2 + (\Delta a*)^2 + (\Delta b*)^2}$. Les coordonnées colorimétriques L*, a* et b* sont calculées en prenant en compte l'illuminant D65 et l'observateur de référence CIE-1931. Il s'agit de coordonnées colorimétriques en réflexion, soit du côté de l'empilement, soit du côté du substrat, c'est-à-dire du côté de la face opposée à l'empilement. Le terme ΔL* désigne la variation de la coordonnée L* entre les deux états considérés. La même convention s'applique pour les termes Δa* et Δb* L'empilement comprend de préférence au moins deux couches d'argent, notamment deux ou trois couches d'argent, car aucun de ces empilements connus actuellement n'est trempable, ce qui signifie que tous ces empilements voient leurs propriétés colorimétriques varier du fait de la trempe. Pour la première fois, le procédé selon l'invention permet d'obtenir un empilement trempable comprenant au moins deux ou trois couches d'argent.

Afin d'obtenir des valeurs de résistivité et d'émissivité encore plus faibles, le substrat peut subir une étape de trempe après l'étape de traitement thermique selon l'invention. La trempe thermique sera généralement réalisée après découpe du verre aux dimensions finales voulues.

Il peut être intéressant de moduler la puissance du laser dans le but de conserver une absorption minimale après le traitement selon l'invention, afin qu'après une éventuelle trempe subséquente, le revêtement ne présente pas de défauts de type flou ou corrosion.

Le substrat est de préférence en verre ou en matière organique polymérique. Il est de préférence transparent, incolore (il s'agit alors d'un verre clair ou extra-clair) ou coloré, par exemple en bleu, gris ou bronze. Le verre est de préférence de type silico-sodo-calcique, mais il peut également être en verre de type borosilicate ou alumino-borosilicate. Les matières organiques polymériques préférées sont le polycarbonate ou le polyméthacrylate de méthyle ou encore le polyéthylènetérephtalate (PET). Le substrat présente avantageusement au moins une dimension supérieure ou égale à 1 m, voire 2 m et même 3 m. L'épaisseur du substrat varie généralement entre 0,5 mm et 19 mm, de préférence entre 0,7 et 9 mm, notamment entre 2 et 8 mm, voire entre 4 et 6 mm. Le substrat peut être plan ou bombé, voire flexible.

Le substrat de verre est de préférence du type flotté, c'est-à-dire susceptible d'avoir été obtenu par un procédé consistant à déverser le verre fondu sur un bain d'étain en fusion (bain « float »). Dans ce cas, la couche à traiter peut aussi bien être déposée sur la face « étain » que sur la face « atmosphère » du substrat. On entend par faces « atmosphère » et « étain », les faces du substrat ayant été respectivement en contact avec l'atmosphère régnant dans le bain float et en contact avec l'étain fondu. La face étain contient une faible quantité superficielle d'étain ayant diffusé dans la structure du verre. Il peut également être obtenu par laminage entre deux rouleaux, technique permettant en particulier d'imprimer des motifs à la surface du verre.

L'empilement bas-émissif, avant ou après traitement thermique, comprend au moins une couche d'argent entre au moins deux couches diélectriques. Dans l'empilement figure au moins une couche absorbante. Dans les passages qui suivent, nous décrirons d'abord l'architecture préférée des empilements traités selon l'invention avant d'aborder en détail l'emplacement de la ou chaque couche absorbante au sein d'une telle architecture. Sauf avis contraire, les épaisseurs indiquées sont des épaisseurs physiques.

L'empilement bas-émissif, avant ou après traitement thermique, comprend de préférence, à partir du substrat, un premier revêtement comprenant au moins une première couche diélectrique, au moins une couche d'argent, éventuellement une couche de sur-bloqueur et un deuxième revêtement comprenant au moins une deuxième couche diélectrique.

De préférence, l'épaisseur physique de la ou de chaque couche d'argent est comprise entre 6 et 20 nm.

La couche de sur-bloqueur est destinée à protéger la couche d'argent pendant le dépôt d'une couche ultérieure (par exemple si cette dernière est déposée sous atmosphère oxydante ou nitrurante) et pendant un éventuel traitement thermique du type trempe ou bombage.

La couche d'argent peut également être déposée sur et en contact avec une couche de sous-bloqueur. L'empilement peut donc comprendre une couche de sur-bloqueur et/ou une couche de sous-bloqueur encadrant la ou chaque couche d'argent.

Les couches de bloqueur (sous-bloqueur et/ou sur-bloqueur) sont généralement à base d'un métal choisi parmi le nickel, le chrome, le titane, le niobium, ou d'un alliage de ces différents métaux. On peut notamment citer les alliages nickel-titane (notamment ceux comprenant environ 50% en poids de chaque métal) ou les alliages nickel-chrome (notamment ceux comprenant 80% en poids de nickel et 20% en poids de chrome). La couche de sur-bloqueur peut encore être constituée de plusieurs couches superposées, par exemple, en s'éloignant du substrat, de titane puis d'un alliage de nickel (notamment un alliage nickel-chrome) ou l'inverse. Les différents métaux ou alliages cités peuvent également être partiellement oxydés, notamment présenter une sous-stœchiométrie en oxygène (par exemple $TiO_x$ ou $NiCrO_x$).

Ces couches de bloqueur (sous-bloqueur et/ou sur-bloqueur) sont très fines, normalement d'une épaisseur inférieure à 1 nm, pour ne pas affecter la transmission lumineuse de l'empilement, et sont susceptibles d'être partiellement oxydées pendant le traitement thermique selon l'invention. Comme indiqué dans la suite du texte, l'épaisseur d'au moins une couche de bloqueur peut être plus élevée, de manière à constituer une couche absorbante au sens de l'invention. D'une manière générale les couches de bloqueur sont des couches sacrificielles, susceptibles de capter l'oxygène provenant de l'atmosphère ou du substrat, évitant ainsi l'oxydation de la couche d'argent.

La première et/ou la deuxième couche diélectrique est typiquement en oxyde (notamment en oxyde d'étain), ou de préférence en nitrure, notamment en nitrure de silicium (en particulier pour la deuxième couche diélectrique, la plus éloignée du substrat). D'une manière générale, le nitrure de silicium peut être dopé, par exemple avec de l'aluminium ou du bore, afin de faciliter son dépôt par les techniques de pulvérisation cathodique. Le taux de dopage (correspondant au pourcentage atomique par rapport à la quantité de silicium) ne dépasse généralement pas 2%. Ces couches diélectriques ont pour fonction de protéger la couche d'argent des agressions chimiques ou mécaniques et influent également sur les propriétés optiques, notamment en réflexion, de l'empilement, grâce à des phénomènes interférentiels.

Le premier revêtement peut comprendre une couche diélectrique, ou plusieurs couches diélectriques, typiquement 2 à 4. Le deuxième revêtement peut comprendre une couche diélectrique, ou plusieurs couches diélectriques, typiquement 2 à 3. Ces couches diélectriques sont de préférence en un matériau choisi parmi le nitrure de silicium, les oxydes de titane, d'étain ou de zinc, ou l'un quelconque de leurs mélanges ou solutions solides, par exemple un oxyde d'étain et de zinc, ou un oxyde de titane et de zinc. Que ce soit dans le premier revêtement ou dans le deuxième revêtement, l'épaisseur physique de la couche diélectrique, ou l'épaisseur physique globale de l'ensemble des couches diélectriques, est de préférence comprise entre 15 et 60 nm, notamment entre 20 et 50 nm.

Le premier revêtement comprend de préférence, immédiatement sous la couche d'argent ou sous l'éventuelle couche de sous-bloqueur, une couche de mouillage dont la fonction est d'augmenter le mouillage et l'accrochage de la couche d'argent. L'oxyde de zinc, notamment dopé à l'aluminium, s'est révélé particulièrement avantageux à cet égard.

Le premier revêtement peut également contenir, directement sous la couche de mouillage, une couche de lissage, qui est un oxyde mixte partiellement voire totalement amorphe (donc de très faible rugosité), dont la fonction est de favoriser la croissance de la couche de mouillage selon une orientation cristallographique préférentielle, laquelle favorise la cristallisation de l'argent par des phénomènes d'épitaxie. La couche de lissage est de préférence composée d'un oxyde mixte d'au moins deux métaux choisis parmi Sn, Zn, In, Ga, Sb. Un oxyde préféré est l'oxyde d'étain et d'indium dopé à l'antimoine.

Dans le premier revêtement, la couche de mouillage ou l'éventuelle couche de lissage est de préférence déposée directement sur la première couche diélectrique. La première couche diélectrique est de préférence déposée directement sur le substrat. Pour adapter au mieux les propriétés optiques de l'empilement (notamment l'aspect en réflexion), la première couche diélectrique peut alternativement être déposée sur une autre couche en oxyde ou en nitrure, par exemple en oxyde de titane.

Au sein du deuxième revêtement, la deuxième couche diélectrique peut être déposée directement sur la couche d'argent, ou de préférence sur un sur-bloqueur, ou encore sur d'autres couches en oxyde ou en nitrure, destinées à adapter les propriétés optiques de l'empilement. Par exemple, une couche d'oxyde de zinc, notamment dopé à l'aluminium, ou encore une couche d'oxyde d'étain, peut être disposée entre un sur-bloqueur et la deuxième couche diélectrique, qui est de préférence en nitrure de silicium. L'oxyde de zinc, notamment dopé à l'aluminium, permet d'améliorer l'adhésion entre l'argent et les couches supérieures.

Ainsi, l'empilement traité selon l'invention comprend de préférence au moins une succession ZnO / Ag / ZnO.

L'oxyde de zinc peut être dopé à l'aluminium. Une couche de sous-bloqueur peut être disposée entre la couche d'argent et la couche sous-jacente. Alternativement ou cumulativement, une couche de sur-bloqueur peut être disposée entre la couche d'argent et la couche sus-jacente.

Enfin, le deuxième revêtement peut être surmonté d'une surcouche, parfois appelée « overcoat » dans la technique. Dernière couche de l'empilement, donc en contact avec l'air ambiant, elle est destinée à protéger l'empilement contre toutes agressions mécaniques (rayures...) ou chimiques. Cette surcouche est généralement très fine pour ne pas perturber l'aspect en réflexion de l'empilement (son épaisseur est typiquement comprise entre 1 et 5 nm). Elle est de préférence à base d'oxyde de titane ou d'oxyde mixte d'étain et de zinc, notamment dopé à l'antimoine, déposé sous forme sous-stœchiométrique. Comme indiqué par la suite, la composition de cette surcouche peut être choisie afin qu'elle soit la ou une couche absorbante de l'empilement.

L'empilement peut comprendre une ou plusieurs couches d'argent, notamment deux ou trois couches d'argent. Lorsque plusieurs couches d'argent sont présentes, l'architecture générale présentée ci-avant peut être répétée. Dans ce cas, le deuxième revêtement relatif à une couche d'argent donnée (donc situé au-dessus de cette couche d'argent) coïncide généralement avec le premier revêtement relatif à la couche d'argent suivante.

L'empilement avant traitement thermique comprend au moins une couche absorbante. Une couche mince absorbante peut être située en contact direct de la couche d'argent afin d'améliorer le transfert de l'énergie réémise vers la couche d'argent. Une couche mince absorbante peut notamment être située en-dessous de la couche d'argent (c'est-à-dire plus proche du substrat) et/ou au-dessus de la couche d'argent.

Selon un premier mode de réalisation hors invention, une couche mince absorbant au moins partiellement le rayonnement laser est une couche métallique déposée directement au-dessus de la couche d'argent (couche de sur-bloqueur), voire directement sous la couche d'argent (couche de sous-bloqueur), et dont l'épaisseur est comprise entre 2 et 5 nm, notamment entre 3 et 5 nm. Cette couche de bloqueur va s'oxyder partiellement lors du traitement laser, donnant naissance à un oxyde globalement sous-stœchiométrique en oxygène dont l'absorption lumineuse est réduite. Des couches plus fines ne présentent pas l'absorption suffisante pour qu'un effet de transfert de l'énergie vers la couche d'argent soit perceptible. En outre, des couches plus fines ont tendance à s'oxyder totalement lors du traitement laser, entraînant une mauvaise résistance mécanique de l'empilement final. La gamme d'épaisseur décrite, inhabituelle car plus élevée que l'épaisseur typique des couches de bloqueur, est donc particulièrement bien adaptée au traitement selon l'invention. En ce qui concerne la nature chimique des couches de bloqueur, ce qui a été décrit *supra* s'applique également au cas où la couche de bloqueur est une couche absorbante au sens de l'invention.

Selon un deuxième mode de réalisation hors invention, une couche mince absorbant au moins partiellement le rayonnement laser est une couche de nitrure, notamment stœchiométrique ou sous-stœchiométrique en azote. Le nitrure stœchiométrique est de préférence choisi parmi les nitrures de niobium, de titane, ou l'un quelconque de leurs mélanges, qui présentent des absorptions élevées dans la gamme de longueur d'onde du laser. Le nitrure sous-stœchiométrique en azote est de préférence choisi parmi les nitrures sous-stœchiométriques de silicium, d'aluminium, de titane, de niobium, ou l'un quelconque de leurs mélanges. Si besoin, notamment si l'empilement traité doit conserver une fonction de contrôle solaire, le nitrure absorbant peut être protégé de l'oxydation en l'encapsulant entre deux couches de nitrures transparents, comme le nitrure de silicium. Cet empilement de trois couches de nitrure superposées peut être placé aussi bien sous la couche d'argent que sur la couche d'argent. Dans l'architecture générale présentée ci-avant, la couche de nitrure absorbante peut aussi bien appartenir au premier revêtement qu'au deuxième revêtement. Lorsqu'elle est encapsulée, l'empilement de trois couches de nitrure remplace de préférence la première couche diélectrique et/ou la deuxième couche diélectrique, notamment quand elles sont en nitrure de silicium. Il a toutefois été observé que lors du traitement selon l'invention, la couche de nitrure absorbante, même non encapsulée, ne s'oxydait pas, en particulier dans le cas du nitrure de niobium qui est particulièrement stable. La couche de nitrure absorbante présente de préférence une épaisseur comprise entre 2 et 10 nm, notamment entre 2 et 5 nm.

Selon un troisième mode de réalisation préféré selon l'invention, la couche mince absorbant au moins partiellement le rayonnement laser est une couche en contact avec l'air et constituée d'un métal, d'un oxyde métallique sous-stœchiométrique en oxygène ou d'un nitrure métallique. Dans le cadre de l'architecture générale présentée précédemment, il s'agit donc de la surcouche ou « overcoat ». Cette surcouche, en contact avec l'air, et donc la dernière couche de l'empilement, va généralement s'oxyder lors du traitement laser, si bien que son absorption lumineuse à l'issue du traitement sera très faible. Dans certains cas, notamment pour le nitrure de niobium, la surcouche ne s'oxyde pas et conserve après traitement une absorption lumineuse notable, ce qui peut présenter un avantage si l'empilement doit posséder une fonction de contrôle solaire. L'épaisseur de cette couche en contact avec l'air est de préférence inférieure ou égale à 5 nm, voire à 3 nm, et supérieure ou égale à 1 nm. Une épaisseur aussi faible est généralement suffisante pour obtenir l'absorption visée. Une faible épaisseur permet en outre une oxydation complète après traitement selon l'invention, et permet donc d'atteindre de fortes transmissions lumineuses. Le métal est de préférence choisi parmi le silicium, le niobium, le titane, l'aluminium, le zinc, l'étain, le zirconium, ou l'un quelconque de leurs alliages. L'oxyde sous-stœchiométrique en oxygène est de préférence un oxyde de silicium, de niobium, de titane, d'aluminium, de zinc, d'étain, de zirconium, ou l'un quelconque de leurs mélanges. Le nitrure peut être stœchiométrique, et dans ce cas, il s'agit de préférence d'un nitrure de niobium, de titane ou leur mélange. Le nitrure peut également être sous-stœchiométrique : il peut alors s'agit d'un nitrure de silicium, d'aluminium, de titane, de niobium, de zinc, d'étain, de zirconium, ou l'un quelconque de leurs mélanges.

Selon un quatrième mode de réalisation hors invention, une couche mince absorbant au moins partiellement le rayonnement laser est une couche d'un oxyde métallique sous-stœchiométrique en oxygène, située sous et de préférence en contact avec la ou chaque couche d'argent et/ou située sur et de préférence en contact avec la ou chaque couche d'argent. Il peut notamment s'agir d'une couche de mouillage, au sens précédemment défini. L'oxyde sous-stœchiométrique en oxygène est de préférence choisi parmi l'oxyde de zinc, l'oxyde de titane, l'oxyde d'étain ou l'un de leurs mélanges.

Selon un cinquième mode de réalisation hors invention, une couche mince absorbant au moins partiellement le rayonnement laser est une couche à base de carbone, en contact avec l'air. Le carbone est de préférence du type graphite ou amorphe, et/ou contient au moins 50%, voire 100% de carbone sp2. La couche mince à base de carbone est de préférence constituée de carbone, mais peut toutefois être dopée avec un métal ou partiellement hydrogénée. L'épaisseur de la couche de carbone est de préférence inférieure à 5 nm, notamment 2 nm et même 1 nm. Le carbone est doté d'une forte capacité d'absorption dans le visible et l'infrarouge. La couche de carbone, surtout lorsqu'il est majoritairement hybridé sp2, notamment du type graphite ou amorphe, et ce d'autant plus que son épaisseur est faible, est éliminée lors du traitement, probablement par oxydation en dioxyde de carbone, lequel s'évapore, si bien que l'absorption résiduelle après traitement est minime. La couche mince à base de carbone peut être obtenue par diverses techniques, notamment la pulvérisation cathodique assistée par champ magnétique, par exemple à l'aide d'une cible de graphite sous atmosphère d'argon. D'autres procédés de dépôt incluent le dépôt chimique en phase vapeur (CVD), le dépôt à l'arc, par évaporation, par des procédés de type sol-gel.

Quelle que soit sa position dans l'empilement, la ou une couche absorbante peut également être à base d'un oxyde dopé par au moins un ion d'un métal de transition (par exemple, le fer, le chrome, le vanadium, le manganèse, le cobalt, le nickel, le cuivre) ou d'une terre rare (par exemple le néodyme ou l'europium).

L'empilement traité peut comprendre une seule couche absorbante. Il peut aussi en comprendre plus, par exemple deux, trois, quatre ou cinq, en particulier dans le cas où la présence d'une seule couche absorbante ne suffit pas à atteindre l'absorption visée pour l'empilement global. L'empilement peut donc être choisi de sorte qu'il contienne plusieurs couches absorbantes, qui combinées permettent d'atteindre l'absorption visée, mais qui individuellement ne le permettent pas. C'est en particulier le cas pour les empilements comprenant plus d'une couche d'argent, notamment deux ou trois : la multiplication du nombre de bloqueurs (sous- et/ou sur-bloqueurs) peut conduire à obtenir une forte absorption à la longueur d'onde du laser, alors que chacune des couches présente une épaisseur insuffisante pour aboutir seule à cette absorption.

Pour améliorer encore l'absorption du rayonnement laser par l'empilement, ce dernier peut donc comprendre plusieurs des types de couches absorbantes précédemment décrites. Chacun des modes de réalisation qui viennent d'être décrits peut notamment être combiné avec un ou plusieurs autres modes. On peut en particulier combiner les modes 1 et 2, 1 et 3, 1 et 4, 1 et 5, 2 et 3, 2 et 4, 3 et 4, 2 et 5, 3 et 5, 1,2 et 3, 1,2 et 4, 1, 2 et 5, 1, 3 et 4, 1, 3 et 5, 2, 3 et 4, 2, 3, et 5, 3, 4, et 5, 1, 2, 3 et 4, 1, 2, 3 et 5, 1, 2, 4 et 5, 1, 3, 4 et 5, 2, 3, 4 et 5. A titre d'exemple, l'empilement peut comprendre une couche de bloqueur épaissie (d'épaisseur comprise entre 2 et 5 nm) et une surcouche absorbante (combinaison des premier et troisième modes de réalisation préférés). Certains modes préférés peuvent également être combinés avec eux-mêmes. Il en est ainsi du deuxième mode préféré, dans le sens où l'empilement peut comprendre plusieurs couches absorbantes de nitrure, notamment encapsulées entre deux couches de nitrure de silicium, par exemple deux ou trois. De même, l'empilement peut comprendre plusieurs couches de bloqueur (sous- et/ou sur-bloqueurs) épaissies de manière à augmenter leur absorption du rayonnement laser (combinaisons du premier mode).

Quelques exemples non limitatifs d'empilements (1, 2 et 4 selon l'invention ; 3, 5-8 hors invention) pouvant être traités selon l'invention sont décrits ci-après. Les couches sont indiquées dans l'ordre de dépôt à partir du substrat. Des couches optionnelles sont indiquées entre parenthèses.

Empilement 1 : $Si_3N_4$ / $TiO_2$ / $(SnZnO_x)$ / ZnO / Ag / Ti / ZnO / $Si_3N_4$ / Ti

Empilement 2 : $TiO_2$ / ZnO / Ag / ZnO / $(TiO_2)$ / $Si_3N_4$ / ZnSn

Empilement 3 : $(Si_3N_4)$ / $TiO_2$ / (NiCr) / Ag / NiCr / (ZnO) / $SnO_2$

Empilement 4 : $Si_3N_4$ / NbN / $Si_3N_4$ / $(SnZnO_x)$ / ZnO / Ag / NiCr / ZnO / Si3N4 / TiOx

Empilement 5 : $SiN_x$ / ZnO / Ag / NiCr / ZnO / $Si_3N_4$

Empilement 6 : $Si_3N_4$ / ZnO / Ag / Ti / ZnO / $Si_3N_4$ / ZnO / Ag / Ti / ZnO / Si3N4

Empilement 7 : $Si_3N_4$ / ZnO / Ag / Ti / ZnO / $Si_3N_4$ / ZnO / Ag / Ti / ZnO / $Si_3N_4$/ ZnO / Ag / Ti / ZnO / $Si_3N_4$

Empilement 8 : $Si_3N_4$ / $TiO_2$/ $(SnZnO_x)$ / ZnO / Ag / Ti / ZnO / $Si_3N_4$ / C

Dans le cas de l'empilement 1, une couche absorbante est constituée par la surcouche métallique (en titane, mais d'autres métaux sont possibles, ainsi que des nitrures ou des oxydes sous-stœchiométriques, comme mentionné précédemment) et éventuellement par le sur-bloqueur (ici en titane, mais les métaux ou alliages cités précédemment peuvent être utilisés) lorsqu'il est épaissi. Cet empilement illustre donc le troisième mode préféré, éventuellement en combinaison avec le premier.

L'empilement 2 comprend une couche absorbante qui est une surcouche métallique en un alliage SnZn. Cet empilement illustre donc le troisième mode préféré. D'autres alliages sont bien évidemment possibles parmi ceux précédemment décrits.

L'empilement 3 comprend un sur-bloqueur et un sous-bloqueur, tous les deux en alliage de nickel et de chrome. Un ou chacun de ces bloqueurs peut être épaissi de manière à constituer une ou deux couche(s) absorbante(s). Par exemple, seul le sous-bloqueur ou seul le sur-bloqueur peut être épaissi (premier mode préféré). Alternativement, les deux bloqueurs peuvent être épaissis (premier mode préféré combiné avec lui-même).

L'empilement 4 comprend une couche absorbante en nitrure de niobium et une surcouche absorbante en oxyde de titane sous-stœchiométrique en oxygène. Il illustre donc une combinaison des deuxième et troisième modes préférés. Le sur-bloqueur en alliage de nickel et de chrome peut également être épaissi de manière à constituer une couche absorbante (premier mode préféré). Ce type d'empilement possède une fonctionnalité de contrôle solaire en plus d'être bas-émissif.

Dans l'empilement 5, une couche absorbante est une couche de nitrure de silicium sous-stœchiométrique en azote (deuxième mode préféré). Le sur-bloqueur en alliage de nickel et de chrome peut également être épaissi de manière à constituer une couche absorbante (premier mode préféré).

Les empilements 6 et 7 illustrent des empilements contenant respectivement deux et trois couches d'argent. Dans certains cas, le grand nombre de bloqueurs (ici en titane, mais les autres métaux ou alliages déjà cités sont utilisables) peut suffire à atteindre l'absorption voulue. Dans d'autres cas, il peut se révéler nécessaire d'épaissir au moins un bloqueur.

L'empilement 8 comprend en dernière couche une couche de carbone, de préférence du type amorphe ou graphite. Cette couche très absorbante est éliminée par oxydation durant le traitement thermique. Une couche métallique, par exemple en titane, peut être située en-dessous de et en contact avec cette couche de carbone.

Dans les empilements présentés ci-avant, au moins une couche d'oxyde de zinc peut également être sous-stœchiométrique en oxygène et constituer une couche absorbante illustrant le quatrième mode de réalisation.

Le traitement selon l'invention est généralement réalisé à l'aide d'un rayonnement présentant une longueur d'onde bien définie. Néanmoins, l'invention n'exclut pas d'utiliser plusieurs lasers différents de sorte que le substrat revêtu subit l'action de plusieurs rayonnements de longueurs d'onde différentes.

La longueur d'onde du rayonnement est de préférence comprise entre 530 et 1000 nm, ou entre 600 et 1000 nm, notamment entre 700 et 950 nm, voire entre 800 et 950 nm car l'argent réfléchit moins ce type de rayonnement que les rayonnements infrarouge de longueur d'onde plus élevée. Le traitement est alors plus efficace. En outre, le substrat, s'il est en verre clair, absorbe moins dans cette gamme de longueur d'onde. Il est alors moins à même de subir des températures élevées.

L'invention a donc également pour objet un procédé d'obtention d'un substrat revêtu sur au moins une face d'un empilement de couches minces bas-émissif comprenant les étapes suivantes :

- on dépose sur ladite au moins une face dudit substrat un empilement de couches minces comprenant au moins une couche mince d'argent entre au moins deux couches minces diélectriques,

- on traite thermiquement la au moins une face revêtue à l'aide d'au moins un rayonnement laser émettant dans au moins une longueur d'onde comprise entre 530 et 1000 nm, ou entre 600 et 1000 nm, notamment entre 700 et 950 nm, voire entre 800 et 950 nm, de sorte que l'émissivité et/ou la résistivité de l'empilement soit diminuée d'au moins 5%.

On utilise de préférence des diodes laser, émettant par exemple à une longueur d'onde de l'ordre de 808 nm, 880 nm, 915 ou encore 940 nm ou 980 nm. Sous forme de systèmes de diodes, de très fortes puissances peuvent être obtenues, permettant d'atteindre des puissances surfaciques au niveau de l'empilement à traiter supérieures à 20kW/cm$^2$, voire à 30kW/cm$^2$.

Pour une simplicité de mise en œuvre accrue, les lasers employés dans le cadre de l'invention peuvent être fibrés, ce qui signifie que le rayonnement laser est injecté dans une fibre optique puis délivré près de la surface à traiter par une tête de focalisation. Le laser peut également être à fibre, au sens où le milieu d'amplification est lui-même une fibre optique.

Le faisceau laser peut être ponctuel, auquel cas il est nécessaire de prévoir un système de déplacement du faisceau laser dans le plan du substrat.

De préférence toutefois, le rayonnement laser est issu d'au moins un faisceau laser formant une ligne (appelée « ligne laser » dans la suite du texte) qui irradie simultanément toute ou partie de la largeur du substrat. Ce mode est préféré car il évite l'utilisation de systèmes de déplacement coûteux, généralement encombrants, et d'entretien délicat. Le faisceau laser en ligne peut notamment être obtenu à l'aide de systèmes de diodes laser de forte puissance associées à une optique de focalisation. L'épaisseur de la ligne est de préférence comprise entre 0,01 et 1 mm. La longueur de la ligne est typiquement comprise entre 5 mm et 1 m. Le profil de la ligne peut notamment être une courbe de Gauss ou un créneau.

La ligne laser irradiant simultanément toute ou partie de la largeur du substrat peut être composée d'une seule ligne (irradiant alors toute la largeur du substrat), ou de plusieurs lignes, éventuellement disjointes. Lorsque plusieurs lignes sont utilisées, il est préférable qu'elles soient disposées de sorte que toute la surface de l'empilement soit traitée. La ou chaque ligne est de préférence disposée perpendiculairement à la direction de défilement du substrat, ou disposée de manière oblique. Les différentes lignes peuvent traiter le substrat simultanément, ou de manière décalée dans le temps. L'important est que toute la surface à traiter le soit.

Afin de traiter toute la surface de la couche, on met de préférence en œuvre un déplacement relatif entre d'une part le substrat revêtu de la couche et la ou chaque ligne laser. Le substrat peut ainsi être mis en déplacement, notamment en défilement en translation en regard de la ligne laser fixe, généralement en dessous, mais éventuellement au-dessus de la ligne laser. Ce mode de réalisation est particulièrement appréciable pour un traitement en continu. Alternativement, le substrat peut être fixe et le laser peut être mobile. De préférence, la différence entre les vitesses respectives du substrat et du laser est supérieure ou égale à 1 mètre par minute, voire 4 et même 6, 8, 10 ou 15 mètres par minute, ce afin d'assurer une grande vitesse de traitement. Le choix judicieux, selon l'invention, de certaines couches de l'empilement permet d'assurer une très forte diminution de la résistivité pour de grandes vitesses de déplacement, et donc de grandes vitesses de traitement.

Lorsque le substrat est en déplacement, notamment en translation, il peut être mis en mouvement à l'aide de tous moyens mécaniques de convoyage, par exemple à l'aide de bandes, de rouleaux, de plateaux en translation. Le système de convoyage permet de contrôler et réguler la vitesse du déplacement. Si le substrat en matière organique polymérique souple, le déplacement peut être réalisé à l'aide d'un système d'avance de films sous forme d'une succession de rouleaux.

Le laser peut également être mis en mouvement de manière à ajuster sa distance au substrat, ce qui peut être utile en particulier lorsque le substrat est bombé, mais pas seulement. En effet, il est préférable que le faisceau laser soit focalisé sur le revêtement à traiter de sorte que ce dernier soit situé à une distance inférieure ou égale à 1 mm du plan focal. Si le système de déplacement du substrat ou du laser n'est pas suffisamment précis quant à la distance entre le substrat et le plan focal, il convient de préférence de pouvoir ajuster la distance entre le laser et le substrat. Cet ajustement peut être automatique, notamment régulé grâce à une mesure de la distance en amont du traitement.

Lorsque la ligne laser est en déplacement, il faut prévoir un système de déplacement du laser, situé au-dessus ou en dessous du substrat. La durée du traitement est régulée par la vitesse de déplacement de la ligne laser.

Toutes les positions relatives du substrat et du laser sont bien entendu possibles, du moment que la surface du substrat peut être convenablement irradiée. Le substrat sera le plus généralement disposé de manière horizontale, mais il peut aussi être disposé verticalement, ou selon toute inclinaison possible. Lorsque le substrat est disposé horizontalement, le laser est généralement disposé de manière à irradier la face supérieure du substrat. Le laser peut également irradier la face inférieure du substrat. Dans ce cas, il faut que le système de support du substrat, éventuellement le système de convoyage du substrat lorsque ce dernier est en mouvement, laisse passer le rayonnement dans la zone à irradier. C'est le cas par exemple lorsque l'on utilise des rouleaux de convoyage : les rouleaux étant disjoints, il est possible de disposer le laser dans une zone située entre deux rouleaux successifs.

Lorsque les deux faces du substrat sont à traiter, il est possible d'employer plusieurs lasers situés de part et d'autre du substrat, que ce dernier soit en position horizontale, verticale, ou selon toute inclinaison.

Le dispositif de rayonnement, par exemple le laser en ligne, peut être intégré dans une ligne de dépôt de couches, par exemple une ligne de dépôt par pulvérisation cathodique assistée par champ magnétique (procédé magnétron), ou une ligne de dépôt chimique en phase vapeur (CVD), notamment assistée par plasma (PECVD), sous vide ou sous pression atmosphérique (APPECVD). La ligne comprend en général des dispositifs de manutention des substrats, une installation de dépôt, des dispositifs de contrôle optique, des dispositifs d'empilage. Les substrats défilent, par exemple sur des rouleaux convoyeurs, successivement devant chaque dispositif ou chaque installation.

Le dispositif de rayonnement, par exemple le laser en ligne, est de préférence situé juste après l'installation de dépôt de la couche, par exemple à la sortie de l'installation de dépôt. Le substrat revêtu peut ainsi être traité en ligne après le dépôt de la couche, à la sortie de l'installation de dépôt et avant les dispositifs de contrôle optique, ou après les dispositifs de contrôle optique et avant les dispositifs d'empilage des substrats.

Le dispositif de rayonnement peut aussi être intégré à l'installation de dépôt. Par exemple, le laser peut être introduit dans une des chambres d'une installation de dépôt par pulvérisation cathodique, notamment dans une chambre où l'atmosphère est raréfiée, notamment sous une pression comprise entre $10^{-6}$ mbar et $10^{-2}$ mbar. Le laser peut aussi être disposé en dehors de l'installation de dépôt, mais de manière à traiter un substrat situé à l'intérieur de ladite installation. Il suffit de prévoir à cet effet un hublot transparent à la longueur d'ondes du rayonnement utilisé, au travers duquel le rayon laser viendrait traiter la couche. Il est ainsi possible de traiter une couche (par exemple une couche d'argent) avant le dépôt subséquent d'une autre couche dans la même installation. Lorsqu'une couche absorbante est une surcouche, par exemple métallique, son oxydation lors du traitement peut être gênée dans le cas où le substrat est placé dans une chambre sous vide. Il est possible dans ce cas de traiter l'empilement dans une chambre spéciale, dans laquelle on contrôlerait l'atmosphère oxydante.

Que le dispositif de rayonnement soit en dehors de ou intégré à l'installation de dépôt, ces procédés « en ligne » sont préférables à un procédé en reprise dans lequel il serait nécessaire d'empiler les substrats de verre entre l'étape de dépôt et le traitement thermique.

Les procédés en reprise peuvent toutefois avoir un intérêt dans les cas où la mise en œuvre du traitement thermique selon l'invention est faite dans un lieu différent de celui où est réalisé le dépôt, par exemple dans un lieu où est réalisée la transformation du verre. Le dispositif de rayonnement peut donc être intégré à d'autres lignes que la ligne de dépôt de couches. Il peut par exemple être intégré à une ligne de fabrication de vitrages multiples (doubles ou triples vitrages notamment), ou à une ligne de fabrication de vitrages feuilletés. Dans ces différents cas, le traitement thermique selon l'invention est de préférence réalisé avant la réalisation du vitrage multiple ou feuilleté.

Le dépôt de l'empilement sur le substrat peut être réalisé par tout type de procédé, en particulier des procédés générant des couches majoritairement amorphes ou nano-cristallisées, tels que le procédé de pulvérisation cathodique, notamment assisté par champ magnétique (procédé magnétron), le procédé de dépôt chimique en phase vapeur assisté par plasma (PECVD), le procédé d'évaporation sous vide, ou le procédé sol-gel.

L'empilement est de préférence déposé par pulvérisation cathodique, notamment assistée par champ magnétique (procédé magnétron).

Pour plus de simplicité, le traitement laser de la couche se fait de préférence sous air et/ou à pression atmosphérique. Il est toutefois possible de procéder au traitement thermique de la couche au sein même de l'enceinte de dépôt sous vide, par exemple avant un dépôt subséquent.

Le traitement laser est de préférence tel que l'on porte chaque point de la couche mince à une température d'au moins 300°C en maintenant une température inférieure ou égale à 100°C en tout point de la face dudit substrat opposée à ladite première face, de manière à augmenter le taux de cristallisation de ladite couche mince en la conservant continue et sans étape de fusion de ladite couche mince. La couche mince reste donc continue à l'issue du traitement.

Par « couche mince continue », on entend au sens de la présente invention que la couche recouvre sensiblement la totalité du substrat ou, dans le cas d'un empilement, la totalité de la couche sous-jacente. Il est important que le caractère continu de la couche mince (et donc ses propriétés avantageuses) soit préservé par le traitement selon l'invention.

Par « point de la couche », on entend une zone de la couche subissant le traitement à un instant donné. Selon l'invention, la totalité de la couche (donc chaque point) est portée à une température d'au moins 300°C, mais chaque point de la couche n'est pas nécessairement traité simultanément. La couche peut être traitée au même instant dans son ensemble, chaque point de la couche étant simultanément porté à une température d'au moins 300°C. La couche peut alternativement être traitée de manière à ce que les différents points de la couche ou des ensembles de points soient successivement portés à une température d'au moins 300°C, ce deuxième mode étant plus souvent employé dans le cas d'une mise en œuvre continue à l'échelle industrielle.

Le procédé selon l'invention peut être mis en œuvre sur un substrat placé aussi bien horizontalement que verticalement. Il peut également être mis en œuvre sur un substrat pourvu de couches minces sur ses deux faces, au moins une couche d'une des faces ou de chaque face étant traitée selon l'invention. Dans le cas où des couches minces déposées sur les deux faces du substrat sont traitées selon l'invention, il est possible de traiter lesdites couches minces de chaque face soit simultanément, soit successivement, par des techniques identiques ou distinctes, en particulier selon que la nature des couches traitées est identique ou distincte. Le cas où le traitement selon l'invention est réalisé simultanément sur les deux faces du substrat est donc bien compris dans la portée de l'invention.

L'invention a encore pour objet les matériaux susceptibles d'être obtenus par le procédé selon l'invention.

L'invention a notamment pour objet un substrat en verre non trempé revêtu sur au moins une face d'un empilement de couches minces bas-émissif comprenant une seule couche mince d'argent entre au moins deux couches minces diélectriques. L'empilement est notamment tel que :

- l'empilement présente une résistance carrée inférieure ou égale à 1,9 Ohms, voire 1,8 Ohms, et l'empilement est tel qu'un substrat de verre clair de 4 mm d'épaisseur revêtu de l'empilement présenterait une transmission lumineuse supérieure ou égale à 75%, voire 76%, et une valeur chromatique a* en réflexion du côté de l'empilement inférieure ou égale à 5, voire 4, ou

- l'empilement présente une résistance carrée supérieure à 1,9 Ohms et inférieure ou égale à 2,4 Ohms, et l'empilement est tel qu'un substrat de verre clair de 4 mm d'épaisseur revêtu de l'empilement présenterait une transmission lumineuse supérieure ou égale à 81%, voire 82% et une valeur chromatique a* en réflexion du côté de l'empilement inférieure ou égale à 5, voire à 4, ou

- l'empilement présente une résistance carrée supérieure à 2,4 Ohms et inférieure ou égale à 3,0 Ohms, et l'empilement est tel qu'un substrat de verre clair de 4 mm d'épaisseur revêtu de l'empilement présenterait une transmission lumineuse supérieure ou égale à 87%, voire 88% et une valeur chromatique a* en réflexion du côté de l'empilement inférieure ou égale à 4.

Les épaisseurs physiques des couches d'argent sont de préférence comprises entre 14 et 18 nm dans la première alternative, entre 12 et 16 nm dans la deuxième alternative et entre 10 et 14 nm dans la troisième alternative.

Le procédé selon l'invention, par l'optimisation du transfert d'énergie vers la couche d'argent qu'il procure, permet en effet d'obtenir des empilements bas-émissifs présentant une combinaison entre l'émissivité d'une part et les propriétés optiques (transmission lumineuse et couleur) d'autre part qui n'avait jamais pu être atteinte autrement que par la trempe.

La transmission lumineuse est calculée à partir d'un spectre selon la norme NF EN 410. La valeur chromatique a* est calculée en prenant en compte l'observateur de référence CIE 1931 et l'illuminant D65.

L'invention a aussi pour objet un substrat en verre non trempé revêtu sur au moins une face d'un empilement de couches minces bas-émissif comprenant au moins deux couches minces d'argent entre au moins deux couches minces diélectriques, tel que le paramètre ΔE* entre ledit substrat revêtu et le substrat revêtu après trempe est inférieur ou égal à 2,0, notamment 1,5. L'empilement comprend de préférence deux ou trois couches d'argent.

Comme convenu dans la technique, $\Delta E^* = \sqrt{(\Delta L^*)^2 + (\Delta a^*)^2 + (\Delta b^*)^2}$. Les coordonnées colorimétriques L*, a* et b* sont calculés en prenant en compte l'illuminant D65 et l'observateur de référence CIE-1931. Il s'agit de coordonnées colorimétriques en réflexion du côté du substrat, c'est-à-dire du côté de la face opposée à l'empilement. Le terme ΔL* désigne la variation de la coordonnée L* entre le substrat revêtu et le même substrat revêtu après trempe. La même convention s'applique pour les termes Δa* et Δb*

Comme indiqué précédemment, le traitement selon l'invention permet d'atteindre des propriétés colorimétriques sensiblement égales à ou au moins très proches de celles obtenues par un traitement de trempe. Si ce substrat non-trempé venait à être trempé, ses propriétés colorimétriques seraient peu affectées par la trempe. A la connaissance des inventeurs, aucun empilement comprenant au moins deux couches d'argent n'avait encore jamais satisfait cette propriété, dite de « trempabilité ».

Les empilements selon l'invention présentent de préférence l'architecture générale décrite précédemment. Pour des raisons de concision et de clarté, les passages correspondants ne sont pas reproduits ici, mais tous les détails sur le positionnement des différentes couches, leur fonction (premier et deuxième revêtement, couches diélectriques, couches de sur-bloqueur, couches de sous-bloqueur, couche de mouillage, couche de lissage, surcouche), leur nature chimique, leurs épaisseurs, sont bien évidemment également applicables aux empilements selon l'invention.

De préférence, les substrats revêtus selon l'invention ne comprennent pas de revêtement antireflets sur la face opposée à l'empilement de couches minces bas-émissif.

Les substrats obtenus selon l'invention peuvent être utilisés dans des vitrages simples, multiples ou feuilletés, des miroirs, des revêtements muraux en verre. Dans le cas d'un vitrage multiple comportant au moins deux feuilles de verre séparées par une lame de gaz, il est préférable que l'empilement soit disposé sur la face en contact avec ladite lame de gaz, notamment en face 2 par rapport à l'extérieur (c'est-à-dire sur la face du substrat en contact avec l'extérieur du bâtiment qui est en opposée à la face tournée vers l'extérieur) ou en face 3 (c'est-à-dire sur la face du deuxième substrat en partant de l'extérieur du bâtiment tournée vers l'extérieur).

L'invention est illustrée à l'aide des exemples de réalisation non limitatifs qui suivent.

EXEMPLE 1

Sur un substrat en verre clair de 4 mm d'épaisseur commercialisé sous la dénomination SGG Planilux par la demanderesse sont déposés différents empilements bas-émissifs. Tous les empilements sont déposés, de manière connue, sur une ligne de pulvérisation cathodique (procédé magnétron) dans laquelle le substrat vient défiler sous différentes cibles.

Le tableau 1 indique pour chaque empilement testé l'épaisseur physique des couches, exprimée en nm. La

EP 2 440 503 B1

première ligne correspond à la couche la plus éloignée du substrat, en contact avec l'air libre.

L'absorption correspond à l'absorption d'un substrat de verre clair de 4 mm d'épaisseur revêtu de l'empilement à la longueur d'onde du rayonnement laser (808 nm).

Tableau 1

| Echantillon | C1 | 1* | 2 | 3 | 4* | 5 | 6 |
|---|---|---|---|---|---|---|---|
| Ti | 0 | 0 | 3 | 2 | 0 | 2 | 2 |
| $ZnSnSbO_x$ | 2 | 0 | 0 | 0 | 2 | 0 | 0 |
| $Si_3N_4$ :Al | 0 | 0 | 0 | 0 | 20 | 0 | 0 |
| NbN | 0 | 0 | 0 | 0 | 4 | 0 | 0 |
| $Si_3N_4$ :Al | 35 | 35 | 40 | 40 | 15 | 35 | 38 |
| ZnO:Al | 5 | 5 | 5 | 5 | 5 | 5 | 5 |
| Ti | 0,5 | 2 | 0,5 | 2 | 0,5 | 0,5 | 0,5 |
| Ag | 9,5 | 9,5 | 15 | 15 | 11 | 11 | 13,5 |
| ZnO :Al | 5 | 5 | 5 | 5 | 5 | 5 | 5 |
| $TiO_2$ | 10 | 10 | 15 | 15 | 10 | 10 | 13 |
| $Si_3N_4$ :Al | 20 | 20 | 10 | 10 | 20 | 20 | 15 |
| Absorption (%) | 9,1 | 16,3 | 25,8 | 30,1 | 24,2 | 19,5 | 21,0 |
| * hors invention | | | | | | | |

Le tableau 2 ci-après récapitule les paramètres du dépôt employés pour les différentes couches.

Tableau 2

| Couche | Cible employée | Pression de dépôt | Gaz |
|---|---|---|---|
| $Si_3N_4$ | Si:Al à 92:8 % wt | $1,5.10^{-3}$ mbar | Ar /(Ar + $N_2$) à 45 % |
| $TiO_2$ | $TiO_x$ avec x de l'ordre de 1,9 | $1,5.10^{-3}$ mbar | Ar /(Ar + $O_2$) à 95 % |
| $ZnSnSbO_x$ | SnZn:Sb à 34:65:1 wt | $2.10^{-3}$ mbar | Ar /(Ar + $O_2$) à 58 % |
| ZnO:Al | Zn:Al à 98:2 % wt | $2.10^{-3}$ mbar | Ar /(Ar + $O_2$) à 52 % |
| Ti | Ti | $2.10^{-3}$ mbar | Ar |
| NbN | Nb | $2.10^{-3}$ mbar | Ar /(Ar + $N_2$) à 40 % |
| Ag | Ag | $2.10^{-3}$ mbar | Ar à 100 % |

Chacun de ces empilements comprend une seule couche d'argent, d'épaisseur 15 nm, 13,5 nm, 11 nm ou 9,5 nm selon les exemples. Tous comportent un sur-bloqueur en titane métallique, une couche de mouillage en oxyde de zinc, deux couches diélectriques en nitrure de silicium. L'échantillon C1 est un exemple comparatif. Il comporte une surcouche non absorbante en oxyde de zinc et d'étain, dopé à l'antimoine, et un sur-bloqueur d'épaisseur classique (0,5 nm), dont il résulte une faible absorption à la longueur d'onde du laser. L'échantillon 1 hors invention comprend un sur-bloqueur épaissi (2 nm), de sorte que l'absorption atteint une valeur de 16%. Les échantillons 2, 3, 5 et 6 selon l'invention possèdent une surcouche métallique en titane. Le sur-bloqueur de l'exemple 3 est en outre épaissi à 2 nm. Compte tenu des surépaisseurs de titane induites par ces modifications, l'absorption du substrat revêtu atteint pour ces exemples des valeurs de 20 à 30%. L'échantillon 4 comprend quant à lui une couche absorbante de nitrure de niobium, qui permet d'atteindre une absorption de 24%. Cet empilement remplit à la fois une fonction bas-émissive et de contrôle solaire.

Ces différents échantillons sont traités à l'aide d'un laser en ligne émettant un rayonnement d'une longueur d'onde de 808 nm, en regard duquel le substrat revêtu vient défiler en translation.

Le tableau 3 ci-après indique :

- la vitesse de défilement, en mètres par minute,

- la résistance carrée, notée $R_c$ et exprimée en ohms, avant et après traitement laser,
- la diminution relative de la résistance carrée due au traitement, notée $\Delta R_c$ et exprimée en pourcents,
- l'émissivité normale à la température de 283 K, calculée selon la norme EN 12898 à partir d'un spectre en réflexion dans la gamme spectrale allant de 5 à 50 micromètres, notée $\varepsilon_n$ et exprimée en %, avant et après traitement laser,
- la diminution relative de l'émissivité normale due au traitement, notée $\Delta \varepsilon_n$ et exprimée en %,
- les transmissions lumineuse et énergétique de l'échantillon, au sens de la norme NF EN 410, avant et après traitement laser,
- la valeur chromatique a* en réflexion du côté de l'empilement, calculée en prenant en compte l'observateur de référence CIE 1931 et l'illuminant D65.

Tableau 3

| Echantillon | C1 | C1 | 1* | 1* | 2 | 3 | 4* | 5 | 6 |
|---|---|---|---|---|---|---|---|---|---|
| Vitesse (m/min) | 10 | 4 | 10 | 4 | 8 | 10 | 10 | 8 | 8 |
| $R_c$ avant ($\Omega$) | 4,70 | 4,70 | 4,82 | 4,82 | 2,20 | 2,20 | 3,67 | 3,70 | 2,72 |
| $R_c$ après ($\Omega$) | 4,65 | 4,51 | 4,10 | 3,75 | 1,72 | 1,67 | 2,97 | 2,84 | 2,12 |
| $\Delta R_c$ (%) | 1,1 | 4,2 | 15 | 22 | 22 | 24 | 19 | 23 | 22 |
| $\varepsilon_n$ avant (%) | 5,2 | 5,2 | 5,3 | 5,3 | 2,4 | 2,4 | 4,0 | 4,0 | 3,0 |
| $\varepsilon_n$ après (%) | 5,2 | 5,0 | 4,5 | 4,1 | 1,8 | 1,8 | 3,2 | 3,1 | 2,3 |
| $\Delta \varepsilon_n$ (%) | 0 | 3,8 | 15 | 23 | 25 | 25 | 20 | 22 | 23 |
| $T_L$ avant (%) | 89,0 | 89,0 | 81,8 | 81,8 | 57,0 | 57,1 | 64,3 | 76,5 | 71,5 |
| $T_L$ après (%) | 89,0 | 89,1 | 88,9 | 89,2 | 65,4 | 76,5 | 65,1 | 88,0 | 83,2 |
| a* après | 1,5 | 1,5 | 2,3 | 2,6 | 3,3 | 3,2 | -2,2 | 2,5 | 2,8 |
| $T_E$ avant (%) | 67,2 | 67,2 | 58,4 | 58,4 | 40,1 | 38,3 | 45,9 | 50,5 | 46,4 |
| $T_E$ après (%) | 67,2 | 67,3 | 67,1 | 66,5 | 47,2 | 47,3 | 46,1 | 61,3 | 57,1 |

Les échantillons selon l'invention, après traitement laser, connaissent une baisse de résistance carrée et d'émissivité d'au moins 15%, voire 20% pour les échantillons les plus absorbants avant traitement, ce qui témoigne d'une amélioration importante de la cristallisation des couches d'argent, notamment d'une augmentation de la taille des grains d'argent cristallisé. Une diminution de la vitesse de traitement permet d'abaisser encore plus les valeurs de résistance carrée et d'émissivité.

Dans le cas des échantillons 1 à 3 et 5 à 6, la transmission lumineuse, faible avant traitement puisque l'empilement était absorbant, augmente fortement, jusqu'à rejoindre, pour une même épaisseur d'argent, une valeur comparable à celle de l'échantillon C1, peu absorbant avant traitement. Cette augmentation de transmission lumineuse rend compte de l'oxydation du titane lors du traitement. En revanche, la transmission lumineuse de l'échantillon 4 évolue peu au cours du traitement laser, probablement car la couche de nitrure de silicium déposée au-dessus de la couche de nitrure de niobium protège cette dernière de l'oxydation.

En comparaison, l'échantillon C1, lorsqu'il est traité à une vitesse identique, ne connaît qu'une baisse de résistance carrée minime. Une diminution de la vitesse de traitement à 4 mètres par minute est même encore insuffisante en termes de diminution de la résistance carrée et de l'émissivité. L'adaptation de l'empilement permet donc d'accélérer considérablement le traitement et/ou d'obtenir des performances bien supérieures pour une même vitesse de traitement.

Ces exemples démontrent en outre que le procédé selon l'invention permet d'obtenir des empilements sur verre non trempé combinant :

- une résistance carrée inférieure ou égale à 1,9 Ohms, une transmission lumineuse supérieure ou égale à 75% et une valeur chromatique a* inférieure ou égale à 5, ce qui est le cas des exemples 2 et 3,

- une résistance carrée inférieure ou égale à 2,4 Ohms, une transmission lumineuse supérieure ou égale à 81% et une valeur chromatique a* inférieure ou égale à 5, ce qui est le cas de l'exemple 6,

- une résistance carrée inférieure ou égale à 3,0 Ohms, une transmission lumineuse supérieure ou égale à 87% et une valeur chromatique a* inférieure ou égale à 4, ce qui est le cas de l'exemple 5.

L'échantillon 2 a également subi une trempe, soit après traitement laser, soit directement après le dépôt (donc sans traitement laser).

Le tableau 4 ci-après indique la transmission lumineuse (au sens de la norme NF EN 410) et les coordonnées colorimétriques en réflexion du côté de l'empilement (illuminant D65, observateur de référence CIE-1931) avant traitement laser, après traitement laser, après traitement laser puis trempe, et après trempe (sans traitement laser). Le tableau 4 indique également les variations de colorimétrie de l'échantillon induites par le traitement laser ou la trempe. Ces variations sont exprimées à l'aide du paramètre $\Delta E^*$ précédemment défini. Sont comparés l'échantillon avant traitement laser avec l'échantillon traité (effet du traitement laser) et avec l'échantillon trempé (effet de la trempe), l'échantillon après traitement laser avec l'échantillon trempé (mais non traité au laser : comparaison entre les effets du traitement laser et les effets de la trempe), et l'échantillon après traitement laser avec l'échantillon traité au laser puis trempé.

Tableau 4

| | | | | |
|---|---|---|---|---|
| avant | TL | 65,4 | | |
| | L* | 42,8 | | |
| | a* | 6,3 | | |
| | b* | -11,5 | | |
| après laser | TL | 76,5 | | |
| | L* | 46,4 | $\Delta E^*$ avant/après laser | 6,9 |
| | a* | 3,3 | | |
| | b* | -6,5 | | |
| après laser puis trempe | TL | 76,9 | | |
| | L* | 46,7 | $\Delta E^*$ après laser/après laser puis trempe | 0,8 |
| | a* | 3,4 | | |
| | b* | -5,8 | | |
| après trempe | TL | 76,7 | | |
| | L* | 46,7 | $\Delta E^*$ avant/après trempe | 7,3 |
| | a* | 3,4 | | |
| | b* | -6,1 | | |
| | | | $\Delta E^*$ après laser/après trempe | 0,5 |

Il ressort du tableau 4 que les coordonnées colorimétriques d'un substrat traité selon l'invention sont très proches de celles d'un substrat trempé. De même, les coordonnées colorimétriques d'un substrat traité selon l'invention sont très proches de celles d'un substrat traité selon l'invention puis trempé. Le traitement selon l'invention permet donc d'obtenir un substrat non-trempé dont l'empilement est toujours trempable, au sens où il ne voit pas ses propriétés colorimétriques substantiellement modifiées par la trempe. Il est donc possible d'associer sur une même façade des substrats non-trempés et trempés.

EXEMPLE 2

Dans cet exemple hors invention, on traite selon l'invention des empilements comprenant deux ou trois couches d'argent déposés sur le même substrat que celui employé pour l'exemple 1.

Le tableau 5 indique pour chaque empilement testé l'épaisseur physique des couches, exprimée en nm. La première ligne correspond à la couche la plus éloignée du substrat, en contact avec l'air libre.

Tableau 5

| Echantillon | 7 | 8 | 9 |
|---|---|---|---|
| ZnSnOx | 0 | 0 | 2 |
| $Si_3N_4$ :Al | 0 | 0 | 20 |

(suite)

| Echantillon | 7 | 8 | 9 |
|---|---|---|---|
| ZnO:Al | 0 | 0 | 5 |
| Ti | 0 | 0 | 0,5 |
| Aq | 0 | 0 | 17 |
| ZnO:Al | 0 | 0 | 5 |
| ZnSnOx | 2 | 0 | 0 |
| $Si_3N_4$ :Al | 15 | 35 | 60 |
| ZnO:Al | 5 | 5 | 5 |
| Ti | 1 | 0 | 0,5 |
| NiCr | 0 | 1 | 0 |
| Aq | 15 | 14 | 13 |
| ZnO:Al | 5 | 5 | 5 |
| NbN | 0 | 1,5 | 0 |
| $Si_3N_4$ :Al | 60 | 70 | 60 |
| ZnO:Al | 5 | 5 | 5 |
| Ti | 1,5 | 0 | 0,5 |
| NiCr | 0 | 1,2 | 0 |
| Aq | 9 | 8,5 | 9 |
| NiCr | 0 | 3,5 | 0 |
| ZnO:Al | 5 | 5 | 5 |
| $Si_3N_4$ :Al | 25 | 15 | 30 |
| Absorption (%) | 21,9 | 36,4 | 19,1 |

Les échantillons 7 et 8 sont des empilements comprenant 2 couches d'argent. L'échantillon 8 comprend des bloqueurs en alliage de nickel et de chrome ainsi qu'une couche absorbante en nitrure de niobium, si bien que son absorption est plus élevée que celle de l'exemple 7. L'échantillon 9 comprend quant à lui 3 couches d'argent.

Ces différents échantillons sont traités à l'aide d'un laser en ligne émettant un rayonnement d'une longueur d'onde de 808 nm, en regard duquel le substrat revêtu vient défiler en translation. Les échantillons sont ensuite trempés selon les techniques connues de l'homme du métier.

Les tableaux 6 et 7 ci-après indiquent :

- la vitesse de défilement, en mètres par minute,

- la résistance carrée, notée $R_c$ et exprimée en ohms, avant et après traitement laser,

- la diminution relative de la résistance carrée due au traitement, notée $\Delta R_c$ et exprimée en pourcents,

- l'émissivité normale à la température de 283 K, calculée selon la norme EN 12898 à partir d'un spectre en réflexion dans la gamme spectrale allant de 5 à 50 micromètres, notée $\varepsilon_n$ et exprimée en %, avant et après traitement laser,

- la diminution relative de l'émissivité normale due au traitement, notée $\Delta \varepsilon_n$ et exprimée en %,

- la transmission lumineuse de l'échantillon, au sens de la norme NF EN 410, avant traitement laser, après traitement laser, après traitement laser suivi d'une trempe, ou après une trempe seule (sans traitement laser),

- la transmission énergétique au sens de la norme NF EN 410, avant et après traitement laser,

- les valeurs chromatiques L*, a*, b* en réflexion du côté de la face opposée à l'empilement (côté substrat), calculées en prenant en compte l'observateur de référence CIE 1931 et l'illuminant D65, avant traitement laser, après traitement laser, après traitement laser suivi d'une trempe, ou après une trempe seule (sans traitement laser),

- le facteur solaire calculé selon la norme NF EN 410 pour un double vitrage comprenant deux substrats de verre clair de 6 mm d'épaisseur encadrant une lame de 15 mm d'épaisseur contenant de l'argon à 90%, dans lequel l'empilement est en face 2, c'est-à-dire sur la face du substrat en contact avec l'extérieur du bâtiment qui est opposée à la face tournée vers l'extérieur (cette dernière étant qualifiée de face 1).

- la sélectivité, qui est le rapport entre la transmission lumineuse calculée selon la norme NF EN 410 et le facteur solaire. Dans ce cas la transmission lumineuse est celle du double-vitrage employé pour le calcul du facteur solaire.

Tableau 6

| Echantillon | 7 | 8 | 9 |
|---|---|---|---|
| Vitesse (m/min) | 15 | 18 | 14 |
| $R_c$ avant ($\Omega$) | 2,44 | 2,60 | 1,31 |
| $R_c$ après ($\Omega$) | 1,86 | 1,96 | 1,05 |
| $\Delta R_c$ (%) | 24 | 25 | 20 |
| $\varepsilon_N$ avant (%) | 2,7 | 2,9 | 2,2 |
| $\varepsilon_N$ après (%) | 2,1 | 2,2 | 1,8 |
| $\Delta\varepsilon_N$ après (%) | 22 | 24 | 18 |
| $T_E$ avant (%) | 36,9 | 19,4 | 29,8 |
| $T_E$ après (%) | 39,2 | 22,2 | 32,3 |
| Facteur solaire avant | 35,0 | 20,6 | 28,7 |
| Facteur solaire après | 36,8 | 22,9 | 30,8 |
| Sélectivité avant | 1,72 | 1,60 | 2,02 |
| Sélectivité après | 1,75 | 1,74 | 2,06 |

Pour ces empilements à 2 ou 3 couches d'argent, la présence de nombreux bloqueurs permet d'obtenir de fortes absorptions à la longueur d'onde du laser, et donc une diminution importante de la résistance carrée et de l'émissivité. La sélectivité des empilements obtenus augmente en relatif de plus de 1%, voire même de plus de 2%.

Le tableau 7 permet de comparer les coordonnées colorimétriques en réflexion côté substrat des échantillons avant traitement laser, après traitement laser, après traitement laser puis trempe, et après trempe (sans traitement laser).

Tableau 7

| Echantillon | 7 | 8 | 9 |
|---|---|---|---|
| $T_L$ avant (%) | 68,3 | 36,5 | 64,4 |
| $T_L$ après laser (%) | 72,9 | 44,2 | 70,2 |
| $T_L$ après laser puis trempe (%) | 73,1 | 44,7 | 71,4 |
| $T_L$ après trempe (%) | 73,3 | 44,6 | 71,5 |
| L* avant | 42,1 | 50,3 | 32,5 |
| L* après laser | 42,6 | 51,0 | 34,1 |
| L* après laser puis trempe | 43,0 | 51,0 | 35,1 |
| L* après trempe | 42,9 | 51,0 | 35,0 |
| a* avant | -0,4 | -1,8 | -0,5 |
| a* après laser | 1,6 | -4,5 | -0,7 |
| a* après laser puis trempe | 1,8 | -5,6 | -0,9 |
| a* après trempe | 1,7 | -5,5 | -0,9 |
| b* avant | -14,2 | -8,1 | -7,4 |
| b* après laser | -13,8 | -6,5 | -6,6 |
| b* après laser puis trempe | -13,0 | -6,1 | -5,8 |
| b* après trempe | -13,2 | -6,1 | -6,0 |

Les valeurs de ΔE* sont les suivantes. Pour l'échantillon 7, elle est de 0,9 entre l'échantillon traité au laser et l'échantillon traité au laser puis trempé, et de 0,7 entre les échantillons respectivement traité au laser et trempé (sans traitement laser). Pour l'échantillon 8, ces valeurs sont respectivement de 1,2 et 1,1. Pour l'échantillon 9, ces valeurs sont respectivement de 1,3 et 1,1. Il est donc possible d'associer sur une même façade des substrats traités selon l'invention (non-trempés), des substrats seulement trempés et des substrats traités selon l'invention puis trempés.

EXEMPLE 3

Sur un substrat en verre clair de 4 mm d'épaisseur commercialisé sous la dénomination SGG Planilux par la demanderesse sont déposés différents empilements bas-émissifs. Tous les empilements sont déposés, de manière connue, sur une ligne de pulvérisation cathodique (procédé magnétron) dans laquelle le substrat vient défiler sous différentes cibles.

Sur un empilement du type Substrat/$Si_3N_4$/ZnO/Ag/NiCr/ZnO/$Si_3N_4$, on dépose une couche absorbante en titane d'environ 3 nm d'épaisseur pour l'échantillon 10 et une couche absorbante en titane de 1,5 nm d'épaisseur, elle-même surmontée d'une couche en carbone d'environ 2 nm d'épaisseur pour l'échantillon 11 hors invention.

L'absorption, qui correspond à l'absorption d'un substrat de verre clair de 4 mm d'épaisseur revêtu de l'empilement à la longueur d'onde du rayonnement laser (dans cet exemple, 980 nm) est de 15,3% pour l'échantillon 10 et de 19,4% pour l'échantillon 11.

La couche de carbone est obtenue par pulvérisation cathodique à l'aide d'une cible en graphite, sous atmosphère d'argon. La présence de cette couche de carbone permet d'augmenter encore l'absorption du rayonnement laser.

Ces différents échantillons sont traités à l'aide d'un laser en ligne émettant un rayonnement d'une longueur d'onde de 980 nm, en regard duquel le substrat revêtu vient défiler en translation.

Le tableau 8 ci-après indique :

- la vitesse de défilement, en mètres par minute,
- la résistance carrée, notée $R_c$ et exprimée en ohms, avant et après traitement laser,
- la diminution relative de la résistance carrée due au traitement, notée $\Delta R_c$ et exprimée en pourcents,
- la transmission lumineuse de l'échantillon, au sens de la norme NF EN 410, avant et après traitement laser,

Tableau 8

| Echantillon | 10 | 10 | 11 | 11 |
|---|---|---|---|---|
| Vitesse (m/min) | 13 | 16 | 20 | 21 |
| $R_c$ avant (Ω) | 5,0 | 5,0 | 4,9 | 4,9 |
| $R_c$ après (Ω) | 4,2 | 4,5 | 4,1 | 4,3 |
| $\Delta R_c$ (%) | -16,3 | -10,3 | -16,5 | -11,5 |
| $T_L$ avant (%) | 80,8 | 80,8 | 76,8 | 76,8 |
| $T_L$ après (%) | 84,1 | 83,0 | 79,4 | 79,5 |

Ces résultats montrent que la surcouche de carbone permet d'obtenir des gains importants en termes de vitesse de défilement.

**Revendications**

1.  Procédé d'obtention d'un substrat revêtu sur au moins une face d'un empilement de couches minces bas-émissif comprenant les étapes suivantes :

    - on dépose sur ladite au moins une face dudit substrat un empilement de couches minces comprenant au moins une couche mince d'argent entre au moins deux couches minces diélectriques,
    - on traite thermiquement la au moins une face revêtue à l'aide d'au moins un rayonnement laser émettant dans au moins une longueur d'onde comprise entre 500 et 2000 nm de sorte que l'émissivité et/ou la résistance carrée de l'empilement est diminuée d'au moins 5%,
    ledit procédé étant tel que ledit empilement avant traitement comprend au moins une couche mince absorbant au moins partiellement le rayonnement laser choisie parmi une couche en contact avec l'air et constituée d'un métal, d'un oxyde métallique sous-stœchiométrique en oxygène ou d'un nitrure métallique, et dont l'épaisseur est supérieure ou égale à 1 nm et inférieure ou égale à 5 nm ;
de sorte que l'absorption dudit empilement à au moins une longueur d'onde du rayonnement laser est telle que l'absorption d'un substrat de verre clair de 4 mm d'épaisseur revêtu dudit empilement à ladite au moins une longueur d'onde du rayonnement laser est supérieure ou égale à 10%.

2. Procédé selon la revendication 1, tel que la température de la face du substrat opposée à la face traitée par le au moins un rayonnement laser n'excède pas 100°C, notamment 50°C et même 30°C pendant le traitement thermique.

3. Procédé selon l'une des revendications précédentes, tel que la résistance carrée et/ou l'émissivité de l'empilement est diminuée d'au moins 15% ou 20% par le traitement thermique.

4. Procédé selon l'une des revendications précédentes, tel que l'empilement comprend au moins deux couches d'argent, l'absorption dudit empilement à au moins une longueur d'onde du rayonnement laser est telle que l'absorption d'un substrat de verre clair de 4 mm d'épaisseur revêtu dudit empilement à ladite au moins une longueur d'onde du rayonnement laser est supérieure ou égale à 11%, et le traitement thermique est tel que la sélectivité de l'empilement est augmentée d'au moins 1%, notamment 2% en relatif.

5. Procédé selon l'une des revendications précédentes, tel que le substrat est en verre ou en matière organique polymérique.

6. Procédé selon l'une des revendications précédentes, tel que le métal est choisi parmi le silicium, le niobium, le titane, l'aluminium, le zinc, l'étain, le zirconium, ou l'un quelconque de leurs alliages.

7. Procédé selon l'une des revendications 1 à 5, tel que l'oxyde sous-stœchiométrique en oxygène est choisi parmi un oxyde de silicium, de niobium, de titane, d'aluminium, de zinc, d'étain, de zirconium, ou l'un quelconque de leurs mélanges.

8. Procédé selon l'une des revendications 1 à 5, tel que le nitrure est un nitrure stœchiométrique choisi parmi le nitrure de niobium, de titane ou leur mélange.

9. Procédé selon l'une des revendications 1 à 5, tel que le nitrure est un nitrure sous-stœchiométrique choisi parmi un nitrure de silicium, d'aluminium, de titane, de niobium, de zinc, d'étain, de zirconium, ou l'un quelconque de leurs mélanges.

10. Procédé selon l'une des revendications précédentes, tel que la puissance surfacique du rayonnement laser au niveau de l'empilement est supérieure ou égale à 20 kW/cm$^2$, notamment 30 kW/cm$^2$.

11. Procédé selon l'une des revendications précédentes, tel que le rayonnement laser est issu d'au moins un faisceau laser formant une ligne qui irradie simultanément toute ou partie de la largeur du substrat.

12. Procédé selon la revendication précédente, dans lequel on met en œuvre un déplacement relatif entre d'une part le substrat revêtu de la couche et la ou chaque ligne laser, de sorte que la différence entre les vitesses respectives du substrat et du laser soit supérieure ou égale à 4 mètres par minute, notamment 6 mètres par minute.

13. Procédé selon l'une des revendications précédentes, tel que la longueur d'ondes du rayonnement laser est comprise entre 530 et 1000 nm.

14. Procédé selon l'une des revendications précédentes, tel que l'empilement est déposé par pulvérisation cathodique assistée par champ magnétique.

15. Procédé selon l'une des revendications précédentes, dans lequel le substrat subit une étape de trempe après l'étape de traitement thermique.

16. Substrat en verre non trempé revêtu sur au moins une face d'un empilement de couches minces bas-émissif comprenant une seule couche mince d'argent entre au moins deux couches minces diélectriques, susceptible d'être obtenu par le procédé selon l'une des revendications 1 à 14, ledit empilement présentant une résistance carrée inférieure ou égale à 1,9 Ohms, voire 1,8 Ohms, et l'empilement étant tel qu'un substrat de verre clair de 4 mm d'épaisseur revêtu de l'empilement présenterait une transmission lumineuse supérieure ou égale à 75%, voire 76%, et une valeur chromatique a* en réflexion du côté de l'empilement inférieure ou égale à 5, voire 4.

17. Substrat en verre non trempé revêtu sur au moins une face d'un empilement de couches minces bas-émissif comprenant une seule couche mince d'argent entre au moins deux couches minces diélectriques, susceptible d'être obtenu par le procédé selon l'une des revendications 1 à 14, ledit empilement présentant une résistance carrée supérieure à 1,9 Ohms et inférieure ou égale à 2,4 Ohms, et l'empilement étant tel qu'un substrat de verre clair de 4 mm d'épaisseur revêtu de l'empilement présenterait une transmission lumineuse supérieure ou égale à 81%, voire 82% et une valeur chromatique a* en réflexion du côté de l'empilement inférieure ou égale à 5, voire à 4.

18. Substrat en verre non trempé revêtu sur au moins une face d'un empilement de couches minces bas-émissif comprenant une seule couche mince d'argent entre au moins deux couches minces diélectriques, susceptible d'être obtenu par le procédé selon l'une des revendications 1 à 14, ledit empilement présentant une résistance carrée supérieure à 2,4 Ohms et inférieure ou égale à 3,0 Ohms, et l'empilement étant tel qu'un substrat de verre clair de 4 mm d'épaisseur revêtu de l'empilement présenterait une transmission lumineuse supérieure ou égale à 87%, voire 88% et une valeur chromatique a* en réflexion du côté de l'empilement inférieure ou égale à 4.

19. Substrat en verre non trempé revêtu sur au moins une face d'un empilement de couches minces bas-émissif comprenant au moins deux couches minces d'argent entre au moins deux couches minces diélectriques, susceptible d'être obtenu par le procédé selon l'une des revendications 1 à 14, tel que le paramètre $\Delta E^*$ entre ledit substrat revêtu et le substrat revêtu après trempe est inférieur ou égal à 2,0, notamment 1,5.

**Patentansprüche**

1. Verfahren zum Erhalten eines Substrats, das auf mindestens einer Seite mit einem Stapel niedrig-emissiver, dünner Schichten beschichtet ist, umfassend die folgenden Schritte:

- Abscheiden eines Stapels dünner Schichten, umfassend mindestens eine dünne Silberschicht, auf der genannten, mindestens einen Seite des genannten Substrats zwischen mindestens zwei dünnen dielektrischen Schichten,
- Wärmebehandeln der mindestens einen Seite, die mithilfe mindestens einer Laserstrahlung beschichtet wird, die in mindestens einer Wellenlänge zwischen 500 und 2000 nm emittiert wird, sodass das Emissionsvermögen und/oder der Flächenwiderstand des Stapels um mindestens 5 % reduziert wird,
wobei das genannte Verfahren derart ist, dass der genannte Stapel vor der Behandlung mindestens eine dünne Schicht umfasst, die die Laserstrahlung mindestens teilweise absorbiert und die aus einer mit Luft in Kontakt stehenden Schicht ausgewählt ist, die aus einem Metall, einem in Sauerstoff substöchiometrischen Metalloxid oder einem Metallnitrid besteht und deren Dicke größer als oder gleich 1 nm und kleiner als oder gleich 5 nm ist; sodass die Absorption des genannten Stapels mindestens einer Wellenlänge der Laserstrahlung derart ist, dass die Absorption von einem Klarglassubstrat mit einer Dicke von 4 mm, das mit dem genannten Stapel beschichtet ist, bei der genannten, mindestens einen Wellenlänge der Laserstrahlung größer als oder gleich 10 % ist.

2. Verfahren nach Anspruch 1, wobei die Temperatur der Seite des Substrats gegenüber der mit der mindestens einen Laserstrahlung behandelten Seite 100 °C, insbesondere 50 °C und ganz besonders 30 °C während der Wärmebehandlung nicht überschreitet.

3. Verfahren nach einem der vorhergehenden Ansprüche, wobei der Flächenwiderstand und/oder das Emissionsvermögen des Stapels durch die Wärmebehandlung um mindestens 15 % oder 20 % verringert wird.

4. Verfahren nach einem der vorhergehenden Ansprüche, wobei der Stapel mindestens zwei Silberschichten umfasst, wobei die Absorption des genannten Stapels bei mindestens einer Wellenlänge der Laserstrahlung derart ist, dass die Absorption von einem Klarglassubstrat mit einer Dicke von 4 mm, das mit dem genannten Stapel beschichtet ist, bei der genannten, mindestens einen Wellenlänge der Laserstrahlung größer als oder gleich 11 % ist, und die Wärmebehandlung derart ist, dass die Selektivität des Stapels relativ um mindestens 1 %, insbesondere 2 % erhöht wird.

5. Verfahren nach einem der vorstehenden Ansprüche, wobei das Substrat aus Glas oder aus organischem polymerem Stoff besteht.

6. Verfahren nach einem der vorhergehenden Ansprüche, wobei das Metall ausgewählt ist aus Silicium, Niob, Titan, Aluminium, Zink, Zinn, Zirkonium oder einer von deren Legierungen.

7. Verfahren nach einem der Ansprüche 1 bis 5, wobei das in Sauerstoff substöchiometrische Metalloxid ausgewählt ist aus ein Silicium-, Niob-, Titan-, Aluminium-, Zink-, Zinn-, Zirkoniumoxid oder eine von deren Mischungen.

8. Verfahren nach einem der Ansprüche 1 bis 5, wobei das Nitrid ein stöchiometrisches Nitrid ist, ausgewählt aus Niob-, Titannitrid oder aus deren Mischung.

9. Verfahren nach einem der Ansprüche 1 bis 5, wobei das Nitrid ein substöchiometrisches Nitrid ist, das ausgewählt ist aus einem Silicium-, Aluminium-, Titan-, Niob-, Zink-, Zinn-, Zirkoniumnitrid oder einer von deren Mischungen.

10. Verfahren nach einem der vorhergehenden Ansprüche, wobei die Flächenleistungsdichte der Laserstrahlung auf der Höhe des Stapels größer als oder gleich 20 kW/cm$^2$, insbesondere 30 kW/cm$^2$ ist.

11. Verfahren nach einem der vorhergehenden Ansprüche, wobei die Laserstrahlung von mindestens einem Laserstrahl kommt, der eine Linie bildet, die gleichzeitig die gesamte oder einen Teil der Breite des Substrats bestrahlt.

12. Verfahren nach dem vorhergehenden Anspruch, wobei eine relative Verlagerung zwischen einerseits dem mit der Schicht beschichteten Substrat und der oder jeder Laserlinie umgesetzt wird, sodass der Unterschied zwischen den jeweiligen Geschwindigkeiten des Substrats und des Lasers größer als oder gleich 4 Meter pro Minute, insbesondere 6 Meter pro Minute ist.

13. Verfahren nach einem der vorhergehenden Ansprüche, wobei die Wellenlänge der Laserstrahlung zwischen 530 und 1000 nm liegt.

14. Verfahren nach einem der vorhergehenden Ansprüche, wobei der Stapel durch magnetfeldunterstütztes Sputtern abgeschieden wird.

15. Verfahren nach einem der vorhergehenden Ansprüche, wobei das Substrat nach dem Wärmebehandlungsschritt einen Temperschritt durchläuft.

16. Ungetempertes Glassubstrat, das auf mindestens einer Seite mit einem Stapel niedrig-emissiver, dünner Schichten beschichtet ist, der eine einzelne dünne Silberschicht zwischen mindestens zwei dünnen dielektrischen Schichten umfasst und der durch das Verfahren nach einem der Ansprüche 1 bis 14 erhalten werden kann, wobei der genannte Stapel einen Flächenwiderstand von kleiner als oder gleich 1,9 Ohm, ganz besonders 1,8 Ohm aufweist, und wenn der Stapel beispielsweise ein Klarglassubstrat mit einer Dicke von 4 mm ist, das mit dem Stapel beschichtet ist, dieser eine Lichtdurchlässigkeit größer als oder gleich 75 %, ganz besonders 76 %, und einen Farbwert a* in Reflexion auf der Seite des Stapels kleiner als oder gleich 5, ganz besonders 4 aufweisen würde.

17. Ungetempertes Glassubstrat, das auf mindestens einer Seite mit einem Stapel niedrig-emissiver, dünner Schichten beschichtet ist, der eine einzelne dünne Silberschicht zwischen mindestens zwei dünnen dielektrischen Schichten umfasst und der durch das Verfahren nach einem der Ansprüche 1 bis 14 erhalten werden kann, wobei der genannte Stapel einen Flächenwiderstand von mehr als 1,9 Ohm und kleiner als oder gleich 2,4 Ohm aufweist, und wenn der Stapel beispielsweise ein Klarglassubstrat mit einer Dicke von 4 mm ist, das mit dem Stapel beschichtet ist, dieser eine Lichtdurchlässigkeit größer als oder gleich 81 %, ganz besonders 82 %, und einen Farbwert a* in Reflexion auf der Seite des Stapels kleiner als oder gleich 5, ganz besonders 4 aufweisen würde.

18. Ungetempertes Glassubstrat, das auf mindestens einer Seite mit einem Stapel niedrig-emissiver, dünner Schichten beschichtet ist, der eine einzelne dünne Silberschicht zwischen mindestens zwei dünnen dielektrischen Schichten umfasst und der durch das Verfahren nach einem der Ansprüche 1 bis 14 erhalten werden kann, wobei der genannte Stapel einen Flächenwiderstand von mehr als 2,4 Ohm und kleiner als oder gleich 3,0 Ohm aufweist, und wenn der Stapel beispielsweise ein Klarglassubstrat mit einer Dicke von 4 mm ist, das mit dem Stapel beschichtet ist, dieser eine Lichtdurchlässigkeit größer als oder gleich 87 %, ganz besonders 88 %, und einen Farbwert a* in Reflexion auf der Seite des Stapels kleiner als oder gleich 4 aufweisen würde.

19. Ungetempertes Glassubstrat, das auf mindestens einer Seite mit einem Stapel niedrig-emissiver,dünner Schichten beschichtet ist, der mindestens zwei dünne Silberschichten zwischen mindestens zwei dünnen dielektrischen Schichten umfasst und durch das Verfahren nach einem der Ansprüche 1 bis 14 erhalten werden kann, wobei der Parameter ΔE* zwischen dem genannten beschichteten Substrat und dem beschichteten Substrat nach dem Tempern kleiner als oder gleich 2,0, insbesondere 1,5 ist.

**Claims**

1. A process for obtaining a substrate coated on at least one face with a low-E thin-film multilayer, comprising the following steps:

   - a thin-film multilayer comprising at least one thin silver film between at least two thin dielectric films is deposited on said at least one face of said substrate; and
   - the at least one coated face is heat treated using at least one source of laser radiation emitting in at least one wavelength between 500 and 2000 nm so that the emissivity and/or the sheet resistance of the multilayer is reduced by at least 5%,
   said process being such that said multilayer before treatment includes at least one thin film at least partially absorbing the laser radiation selected from a film in contact with the air and consisting of a metal, an oxygen-substoichiometric metal oxide or a metal nitride having a thickness greater than or equal to 1 nm, and less than or equal to 5 nm,
   so that the absorption of said multilayer at at least one wavelength of the laser radiation is such that the absorption of a clear glass substrate 4 mm in thickness coated with said multilayer at said at least one wavelength of the laser radiation is greater than or equal to 10%.

2. The process as claimed in claim 1, such that the temperature of that face of the substrate on the opposite side from the face treated by the at least one source of laser radiation does not exceed 100°C, especially 50°C and even 30°C during the heat treatment.

3. The process as claimed in either of the preceding claims, such that the sheet resistance and/or the emissivity of the multilayer is reduced by at least 15% or 20% by the heat treatment.

4. The process as claimed in one of the preceding claims, such that the multilayer comprises at least two silver films, the absorption of said multilayer at at least one wavelength of the laser radiation is such that the absorption of a clear glass substrate 4 mm in thickness coated with said multilayer at said at least one wavelength of the laser radiation is greater than or equal to 11% and the heat treatment is such that the selectivity of the multilayer is increased by at least 1%, especially 2%, in relative magnitude.

5. The process as claimed in one of the preceding claims, such that the substrate is made of glass or a polymeric organic substance.

6. The process as claimed in one of the preceding claims, such that the metal is selected from silicon, niobium, titanium, aluminum, zinc, tin, zirconium, or any mixture thereof.

7. The process as claimed in one of claims 1 to 5, such that the oxygen-substoichiometric metal oxide is selected from silicon, niobium, titanium, aluminum, zinc, tin or zirconium oxide, or any mixture thereof.

8. The process as claimed in one of claims 1 to 5, such that the nitride is a stoichiometric nitride selected from niobium or titanium nitride, or mixture thereof.

9. The process as claimed in one of claims 1 to 5, such that the nitride is a substoichiometric nitride selected from silicon, aluminum, titanium, niobium zinc, tin or zirconium nitride, or any mixture thereof.

10. The process as claimed in one of the preceding claims, such that the surface power of the laser radiation on the multilayer is equal to or greater than 20 kW/cm$^2$, especially 30 kW/cm$^2$.

11. The process as claimed in one of the preceding claims, such that the laser radiation is emitted by at least one laser beam forming a line which simultaneously irradiates all or part of the width of the substrate.

12. The process as claimed in the preceding claim, in which a relative movement is employed between the substrate coated with the film and the or each laser line, so that the difference between the respective speeds of the substrate and the laser is greater than or equal to 4 meters per minute, especially 6 meters per minute.

13. The process as claimed in one of the preceding claims, such that the wavelength of the laser radiation is between 530 and 1000 nm.

14. The process as claimed in one of the preceding claims, such that the multilayer is deposited by magnetron sputtering.

15. The process as claimed in one of the preceding claims, in which the substrate undergoes a tempering step after the heat treatment step.

16. An untempered glass substrate coated on at least one face with a low-E thin-film multilayer comprising a single thin silver film between at least two thin dielectric films, obtainable from the process according to one of claims 1 to 14, said multilayer having a sheet resistance of less than or equal to 1.9 ohms, or even 1.8 ohms, and the multilayer being such that a clear glass substrate 4 mm in thickness coated with the multilayer has a light transmission greater than or equal to 75%, or even 76%, and a chromatic value a* in reflection on the multilayer side of less than or equal to 5, or even 4.

17. An untempered glass substrate coated on at least one face with a low-E thin-film multilayer comprising a single thin silver film between at least two thin dielectric films, obtainable from the process according to one of claims 1 to 14, said multilayer having a sheet resistance greater than 1.9 ohms and less than or equal to 2.4 ohms, and the multilayer being such that a clear glass substrate 4 mm in thickness coated with the multilayer has a light transmission greater than or equal to 81%, or even 82%, and a chromatic value a* in reflection on the multilayer side of less than or equal to 5, or even 4.

18. An untempered glass substrate coated on at least one face with a low-E thin-film multilayer comprising a single thin silver film between at least two thin dielectric films, obtainable from the process according to one of claims 1 to 14, said multilayer having a sheet resistance greater than 2.4 ohms and less than or equal to 3.0 ohms, and the multilayer being such that a clear glass substrate 4 mm in thickness coated with the multilayer has a light transmission greater than or equal to 87%, or even 88%, and a chromatic value a* in reflection on the multilayer side of less than or equal to 4.

19. An untempered glass substrate coated on at least one face with a low-E thin-film multilayer comprising at least two thin silver films between at least two thin dielectric films, obtainable from the process according to one of claims 1 to 14, such that the parameter ΔE* between said coated substrate and the coated substrate after tempering is less than or equal to 2.0, especially 1.5.

**EP 2 440 503 B1**

## RÉFÉRENCES CITÉES DANS LA DESCRIPTION

**Documents brevets cités dans la description**

- WO 2008096089 A